(19) **Europäisches Patentamt / European Patent Office / Office européen des brevets**

(11) **EP 4 637 068 A1**

(12) **EUROPEAN PATENT APPLICATION**
published in accordance with Art. 153(4) EPC

(43) Date of publication:
**22.10.2025 Bulletin 2025/43**

(21) Application number: **23909853.6**

(22) Date of filing: **27.11.2023**

(51) International Patent Classification (IPC):
**H04L 5/00** (2006.01)

(52) Cooperative Patent Classification (CPC):
**H04L 5/00; H04W 24/08; H04W 72/231**

(86) International application number:
**PCT/CN2023/134347**

(87) International publication number:
**WO 2024/139922 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2022 CN 202211711550**

(71) Applicant: **Huawei Technologies Co., Ltd.**
**Shenzhen, Guangdong 518129 (CN)**

(72) Inventors:
• **YI, Feng**
  **Shenzhen, Guangdong 518129 (CN)**
• **SU, Hongjia**
  **Shenzhen, Guangdong 518129 (CN)**
• **QI, Hong**
  **Shenzhen, Guangdong 518129 (CN)**
• **LU, Lei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) A communication method and apparatus are provided. First indication information indicates a first terminal device to send SL data on a second resource, which indicates that the first terminal device is a device that performs SL transmission. The first terminal device may receive, on a first resource determined based on configuration information, a common reference signal sent by a network device, to obtain a signal measurement result, and send the signal measurement result to the network device. Therefore, the first terminal device that performs SL transmission may sense interference from a Uu communication system by identifying the common reference signal sent by the network device, and may further notify the network device of a magnitude of the interference. In this way, the network device can determine an available second resource based on the magnitude of interference from the Uu communication system, so that the first terminal device sends the SL data on the second resource without interference. This avoids interference between an SL communication system and the Uu communication system.

FIG. 3

## Description

This application claims priority to Chinese Patent Application No. 202211711550.5, filed with the China National Intellectual Property Administration on December 29, 2022, and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

Communication devices in a same communication system can sense interference from each other, while communication devices in different communication systems cannot sense interference from each other. To be specific, because reference signals in different communication systems are in different signaling formats, a communication device in one communication system cannot identify a reference signal sent by a communication device in another communication system, and cannot sense interference therefrom. Therefore, how to avoid interference between different communication systems becomes an urgent technical problem to be resolved at a current stage.

## SUMMARY

This application provides a communication method and apparatus, to avoid interference between different communication systems.

According to a first aspect, a communication method is provided, including: A first terminal device determines a first resource based on configuration information. The first terminal device receives a common reference signal (common reference signal) from a network device on the first resource. The first terminal device measures the common reference signal to obtain a signal measurement result. The first terminal device sends the signal measurement result to the network device. The first terminal device receives first indication information from the network device. The first indication information indicates the first terminal device to send sidelink (sidelink, SL) data on a second resource, the second resource is determined by the network device based on the signal measurement result, and a time domain resource of the first resource is located before a time domain resource of the second resource. As can be learned, the first indication information indicates the first terminal device to send the SL data on the second resource, which indicates that the first terminal device is a terminal device that performs SL transmission. The first terminal device may receive, on the first resource determined based on the configuration information, the common reference signal sent by the network device, to obtain the signal measurement result, and send the signal measurement result to the network device. Therefore, the first terminal device that performs SL transmission may sense interference from a Uu communication system (specifically, interference caused by downlink transmission) by identifying the common reference signal sent by the network device, and may further notify the network device of a magnitude of the interference. Further, the network device may further determine the second resource based on the signal measurement result, and send, to the first terminal device, the first indication information for sending the SL data on the second resource, which indicates that the network device may determine an available second resource based on the magnitude, reported by the first terminal device that performs SL transmission, of the interference from the Uu communication system, so that the first terminal device sends the SL data on the second resource without interference, that is, interference between an SL communication system and the Uu communication system is avoided.

With reference to the first aspect, optionally, the configuration information may be predefined or (pre)configured in the first terminal device. For example, the configuration information is indicated by the network device to the first terminal device, or the configuration information is indicated by a second terminal device to the first terminal device. That the configuration information is indicated by the network device to the first terminal device may be understood as, for example: The configuration information is indicated by the network device to the first terminal device by using radio resource control (radio resource control, RRC) signaling. That the configuration information is indicated by the second terminal device to the first terminal device may be understood as, for example: The configuration information is indicated by the second terminal device to the first terminal device by using RRC signaling, MAC CE signaling, or SCI signaling. The first terminal device performs SL transmission with the second terminal device. For example, the first terminal device sends the SL data to the second terminal device on the second resource.

In a possible implementation, the common reference signal may be, for example, a sequence, such as a pseudo-random sequence, or may be a combination or a variant of a sequence. In another possible implementation, the common reference signal may be, for example, a reference signal encoded by the network device based on a sequence, and the reference signal encoded by the network device based on the sequence may include, for example, an identifier of the network device.

With reference to the first aspect, optionally, the method further includes: The first terminal device measures the common reference signal based on a periodicity and an offset of the periodicity. The periodicity and the offset of the periodicity are predefined or preconfigured. For example, the periodicity and the offset of the periodicity are predefined or preconfigured in the first terminal device. Alternatively, the periodicity and the offset of the periodicity are indicated by the network device to the first terminal device, or the periodicity and the offset of the periodicity are indicated by the second terminal device to the first terminal device. In this way, the first terminal device does not need to repeatedly receive an instruction for measuring the common reference signal, thereby reducing signaling overheads and power consumption of measurement.

With reference to the first aspect, optionally, the method further includes: The first terminal device receives first signaling from the network device or the second terminal device. The first signaling indicates the first terminal device to measure the common reference signal. The first signaling further includes a start time and/or a duration for measuring the common reference signal by the first terminal device. This indicates that the network device or the second terminal device may dynamically indicate the first terminal device to measure the common reference signal, thereby improving flexibility of measuring the common reference signal.

With reference to the first aspect, optionally, the method further includes: A higher layer of the first terminal device sends second signaling to a physical layer of the first terminal device. The higher layer of the first terminal device includes an RRC layer or a media access control (media access control, MAC) layer, and the second signaling indicates the physical layer of the first terminal device to measure the common reference signal. The second signaling further includes a start time and/or a duration for measuring the common reference signal by the physical layer of the first terminal device. This indicates that measurement on the common reference signal may be triggered by the higher layer of the first terminal device, and this can meet a requirement of the first terminal device.

With reference to the first aspect, optionally, the method further includes: The first terminal device determines, based on third signaling, that the configuration information takes effect, for example, determining, based on a first field in the third signaling, that the configuration information takes effect. Specifically, when the first field indicates enable (enable), active (active), available (available), or true (true), or a bit value corresponding to the first field is "1", the configuration information takes effect, indicating that a resource configured by using the configuration information may be used to carry the common reference signal. When the first field indicates disable (disable), deactive (deactive), unavailable (unavailable), or false (false), or the bit value corresponding to the first field is "0", the configuration information does not take effect, indicating that the resource configured by using the configuration information may be used to carry data. For another example, when the third signaling includes a first field, the configuration information takes effect, indicating that the resource configured by using the configuration information may be used to carry the common reference signal. When the third signaling does not include a first field, the configuration information does not take effect, indicating that the resource configured by using the configuration information may be used to carry data.

According to a second aspect, a communication method is provided, including: A network device sends a common reference signal on a first resource. The network device receives a signal measurement result sent by a first terminal device. The signal measurement result is obtained by the first terminal device by measuring the common reference signal. The network device determines a second resource based on the signal measurement result. The network device sends first indication information to the first terminal device. The first indication information indicates the first terminal device to send SL data on the second resource, and a time domain resource of the first resource is located before a time domain resource of the second resource. As can be learned, the first indication information indicates the first terminal device to send the SL data on the second resource, which indicates that the first terminal device is a device that performs SL transmission. The first terminal device may receive, on the first resource determined based on the configuration information, the common reference signal sent by the network device, to obtain the signal measurement result, and send the signal measurement result to the network device. Therefore, the first terminal device that performs SL transmission may sense interference from a Uu communication system by identifying the common reference signal sent by the network device, and may further notify the network device of a magnitude of the interference. Further, the network device may further determine the second resource based on the signal measurement result, and send, to the first terminal device, the first indication information for sending the SL data on the second resource, which indicates that the network device may determine an available second resource based on the magnitude of the interference from the Uu communication system, so that the first terminal device sends the SL data on the second resource without interference, that is, interference between an SL communication system and the Uu communication system is avoided.

With reference to the second aspect, optionally, that the network device sends the common reference signal on the first resource includes: When a first condition is met, the network device sends the common reference signal on the first resource. The first condition includes at least one of the following: the network device has to-be-sent data, or the network device receives second indication information sent by the first terminal device or a third terminal device. The second indication information indicates the network device to send the common reference signal, and the third terminal device is a terminal device that performs uplink transmission with the network device. In a possible implementation, in this application, the to-be-sent data of the network device may be understood as, for example, one or more of a physical downlink shared channel (physical downlink shared channel, PDSCH), a physical downlink control channel (physical downlink control channel, PDCCH), or the like. As can be learned, when having to-be-sent data, the network device may send the common reference signal to the first terminal device on the first resource, which indicates that the network device may actively send the common reference signal when intending to send data. Alternatively, when receiving the second indication information of the first terminal device or the third terminal device, the network device may send the common reference signal, which indicates that the first terminal device or the third terminal device may trigger the network device to send the common reference signal, thereby improving flexibility of sending the common reference signal.

With reference to the second aspect, optionally, the method further includes: The network device sends first signaling to the first terminal device. The first signaling indicates the first terminal device to measure the common reference signal. The first signaling further includes a start time and/or a duration for measuring the common reference signal by the first terminal device. This indicates that the network device may dynamically indicate the first terminal device to measure the common reference signal, thereby improving flexibility of measuring the common reference signal.

With reference to the second aspect, optionally, the first resource does not overlap a third resource, and the third resource includes at least one of the following: any resource in a control resource set (CORESET), or a resource used by the network device to send a reference signal. Any resource in the CORESET includes a resource in a CORESET configured for any terminal device within a service range of the network device. In this application, the reference signal sent by the network device is a reference signal sent by using a downlink channel, and may include, for example, at least one of the following: a demodulation reference signal (demodulation reference signal, DMRS), a synchronization signal block (synchronization signal block, SSB), or a channel state information reference signal (channel state information reference signal, CSI-RS). The DMRS sent by the network device may include, for example, at least one of the following: a DMRS carried on a physical downlink shared channel (physical downlink shared channel, PDSCH) (DMRS for PDSCH), a DMRS carried on a physical downlink control channel (physical downlink control channel, PDCCH) (DMRS for PDSCH), or a DMRS carried on a physical broadcast channel (physical broadcast channel, PBCH) (DMRS for PBCH). The CSI-RS sent by the network device may include, for example, a non-zero-power CSI-RS (non-zero-power CSI-RS, NZP CSI-RS) or a CSI-RS used for interference measurement (channel state information-interference measurement, CSI-IM). When the first resource does not overlap any resource in the CORESET, or the first resource does not overlap a resource used by the network device to send the DMRS and/or the SSB, it is ensured that communication between devices is not affected. When the first resource does not overlap a resource used by the network device to send the CSI-IM, it can be ensured that measurement results of a plurality of sent reference signals do not affect each other.

Optionally, in this application, that the first resource does not overlap the third resource may be understood as that the time domain resource of the first resource does not overlap a time domain resource of the third resource, and/or a frequency domain resource of the first resource does not overlap a frequency domain resource of the third resource.

According to a third aspect, a communication method is provided, including: A first terminal device determines a first resource based on configuration information. The first terminal device receives a common reference signal from a network device on the first resource. The first terminal device measures the common reference signal to obtain a signal measurement result. The first terminal device sends SL data on a second resource based on the signal measurement result. A time domain resource of the first resource is located before a time domain resource of the second resource. As can be learned, the first terminal device sends the SL data on the second resource based on the signal measurement result, which indicates that the first terminal device is a device that performs SL transmission. The first terminal device may receive, on the first resource determined based on the configuration information, the common reference signal sent by the network device, to obtain the signal measurement result, and send the SL data on the second resource based on the signal measurement result. Therefore, the first terminal device that performs SL transmission may sense interference from a Uu communication system by identifying the common reference signal sent by the network device, and may further determine an available second resource based on a magnitude of the interference, so that the first terminal device sends the SL data on the second resource without interference, that is, interference between an SL communication system and the Uu communication system is avoided.

With reference to the third aspect, optionally, the configuration information may be predefined or (pre) configured in the first terminal device. For example, the configuration information is indicated by the network device to the first terminal device, or the configuration information is indicated by a second terminal device to the first terminal device. That the configuration information is indicated by the network device to the first terminal device may be understood as, for example: The configuration information is indicated by the network device to the first terminal device by using RRC signaling. That the configuration information is indicated by the second terminal device to the first terminal device may be understood as, for example: The configuration information is indicated by the second terminal device to the first terminal device by using RRC signaling. The first terminal device performs SL transmission with the second terminal device. For example, the first terminal device sends the SL data to the second terminal device on the second resource.

In a possible implementation, the common reference signal may be, for example, a sequence, such as a pseudo-random sequence, or may be a combination, a variant, or the like of a sequence. In another possible implementation, the common reference signal may be, for example, a reference signal encoded by the network device based on a sequence, and the reference signal encoded by the network device based on the sequence may include, for example, an identifier of the network device.

With reference to the third aspect, optionally, that the first terminal device determines the first resource based on the configuration information includes: The first terminal device determines the first resource based on the configuration information and the second resource. A frequency domain resource of the second resource includes a frequency domain resource of the first resource.

With reference to the third aspect, optionally, that the first terminal device sends the SL data on the second resource based on the signal measurement result includes: When the signal measurement result is less than or equal to a first threshold, the first terminal device sends the SL data by using the second resource. The frequency domain resource of the second resource includes the frequency domain resource of the first resource. As can be learned, when the signal measurement result is less than or equal to the first threshold, it means that a distance between the first terminal device and the network device is greater than or equal to a first distance, and even if both the first terminal device and the network device use the second resource to send data, mutual interference does not occur.

The first distance may be predefined or (pre) configured in the first terminal device. For example, the first distance is indicated by the network device to the first terminal device, or the first distance is indicated by the second terminal device to the first terminal device. That the first distance is indicated by the network device to the first terminal device may be understood as, for example: The first distance is indicated by the network device to the first terminal device by using RRC signaling, MAC control element (control element, CE) signaling, or downlink control information (downlink control information, DCI) signaling. The signaling is sent by using a downlink transport channel. That the first distance is indicated by the second terminal device to the first terminal device may be understood as, for example: The first distance is indicated by the second terminal device to the first terminal device by using RRC signaling, MAC CE signaling, or sidelink control information (sidelink control information, SCI) signaling. The signaling is sent by using a sidelink transport channel.

With reference to the third aspect, optionally, that the first terminal device determines the first resource based on the configuration information includes: The first terminal device determines the first resource based on the configuration information and the second resource. A frequency domain resource of the second resource does not overlap a frequency domain resource of the first resource.

With reference to the third aspect, optionally, that the first terminal device sends the SL data on the second resource based on the signal measurement result includes: When the signal measurement result is greater than or equal to a second threshold, the first terminal device sends the SL data by using the second resource. The frequency domain resource of the second resource does not overlap the frequency domain resource of the first resource. As can be learned, when the signal measurement result is greater than or equal to the second threshold, it means that a distance between the first terminal device and the network device is less than or equal to a second distance. In this case, if the first terminal device and the network device send data by using an overlapping frequency domain resource at the same time, mutual interference easily occurs. Therefore, to avoid mutual interference between transmission of the two, the first terminal device may actively avoid the frequency domain resource included in the first resource, and send data by using the second resource that does not overlap the frequency domain resource of the first resource.

The second distance may be predefined or (pre) configured in the first terminal device. For example, the second distance is indicated by the network device to the first terminal device, or the second distance is indicated by the second terminal device to the first terminal device. That the second distance is indicated by the network device to the first terminal device may be understood as, for example: The second distance is indicated by the network device to the first terminal device by using RRC signaling, MAC CE signaling, or DCI signaling. The signaling is sent by using a downlink transport channel. That the second distance is indicated by the second terminal device to the first terminal device may be understood as, for example: The second distance is indicated by the second terminal device to the first terminal device by using RRC signaling, MAC CE signaling, or SCI signaling. The signaling is sent by using a sidelink transport channel. Optionally, the first distance and the second distance may be the same or different.

With reference to the third aspect, optionally, the method further includes: The first terminal device measures the common reference signal based on a periodicity and an offset of the periodicity. The periodicity and the offset of the periodicity are predefined or preconfigured. For example, the periodicity and the offset of the periodicity are predefined or preconfigured in the first terminal device. Alternatively, the periodicity and the offset of the periodicity are indicated by the network device to the first terminal device, or the periodicity and the offset of the periodicity are indicated by the second terminal device to the first terminal device. In this way, the first terminal device does not need to repeatedly receive an instruction for measuring the common reference signal, thereby reducing signaling overheads and power consumption of measurement.

With reference to the third aspect, optionally, the method further includes: The first terminal device receives first signaling from the network device or the second terminal device. The first signaling indicates the first terminal device to measure the common reference signal. The first signaling further includes a start time and/or a duration for measuring the common reference signal by the first terminal device. This indicates that the network device or the second terminal device may dynamically indicate the first terminal device to measure the common reference signal, thereby improving flexibility of measuring the common reference signal.

With reference to the third aspect, optionally, the method further includes: A higher layer of the first terminal device sends second signaling to a physical layer of the first terminal device. The higher layer of the first terminal device includes an RRC layer or a MAC layer, and the second signaling indicates the physical layer of the first terminal device to measure the common reference signal. The second signaling further includes a start time and/or a duration for measuring the common reference signal by the physical layer of the first terminal device. This indicates that measurement on the common reference signal may be triggered by the higher layer of the first terminal device, and this can meet a requirement of the first terminal device.

With reference to the third aspect, optionally, the method further includes: The first terminal device determines, based on third signaling, that the configuration information takes effect, for example, determining, based on a first field in the third signaling, that the configuration information takes effect. Specifically, when the first field indicates enable, active, available, or true, or a bit value corresponding to the first field is "1 ", the configuration information takes effect, indicating that a resource configured by using the configuration information may be used to carry the common reference signal. When the first field indicates disable, deactive, unavailable, or false, or the bit value corresponding to the first field is "0", the configuration information does not take effect, indicating that the resource configured by using the configuration information may be used to carry data. For another example, when the third signaling includes a first field, the configuration information takes effect, indicating that the resource configured by using the configuration information may be used to carry the common reference signal. When the third signaling does not include a first field, the configuration information does not take effect, indicating that the resource configured by using the configuration information may be used to carry data.

According to a fourth aspect, a communication method is provided, including: When a first condition is met, the network device sends a common reference signal on a first resource. The first condition includes at least one of the following: the network device has to-be-sent data, or the network device receives second indication information sent by a first terminal device or a third terminal device. The second indication information indicates the network device to send the common reference signal, and the third terminal device is a terminal device that performs uplink transmission with the network device. As can be learned, when having to-be-sent data, the network device may send the common reference signal to the first terminal device on the first resource, which indicates that the network device may actively send the common reference signal when intending to send data. Alternatively, when receiving the second indication information of the first terminal device or the third terminal device, the network device may send the common reference signal, which indicates that the first terminal device or the third terminal device may trigger the network device to send the common reference signal, thereby improving flexibility of sending the common reference signal.

With reference to the fourth aspect, optionally, the method further includes: The network device sends first signaling to the first terminal device. The first signaling indicates the first terminal device to measure the common reference signal. The first signaling further includes a start time and/or a duration for measuring the common reference signal by the first terminal device. This indicates that the network device may dynamically indicate the first terminal device to measure the common reference signal, thereby improving flexibility of measuring the common reference signal.

With reference to the fourth aspect, optionally, the first resource does not overlap a third resource, and the third resource includes at least one of the following: any resource in a control resource set, or a resource used by the network device to send a reference signal. Any resource in the control resource set includes a resource in a control resource set configured for any terminal device within a service range of the network device.

According to a fifth aspect, a communication method is provided, including: A first terminal device determines a first resource based on configuration information. The first terminal device receives a common reference signal from a second terminal device on the first resource. The first terminal device measures the common reference signal to obtain a signal measurement result. The first terminal device sends the signal measurement result to a first network device. The first terminal device receives first indication information from the first network device. The first indication information indicates the first terminal device to send SL data on a second resource, the second resource is determined by the first network device based on the signal measurement result, and a time domain resource of the first resource is located before a time domain resource of the second resource. As can be learned, the first indication information indicates the first terminal device to send the SL data on the second resource, which indicates that the first terminal device is a device that performs SL transmission. The first terminal device may receive, on the first resource determined based on the configuration information, the common reference signal sent by the second terminal device (the second terminal device is a terminal device that performs uplink transmission with a second network device), to obtain the signal measurement result, and send the signal measurement result to the network device. Therefore, the first terminal device that performs SL transmission may sense interference from a Uu communication system by identifying the common reference signal sent by the second terminal device, and may further notify the first network device of a magnitude of the interference. Further, the first network device may further determine the second resource based on the signal measurement result, and send, to the first terminal device, the first indication information for sending the SL data on the second resource, which indicates that the first network device may determine an available second resource based on the magnitude of the interference from the Uu communication system, so that the first terminal device sends the SL data on the second resource without interference, that is, interference between an SL communication system and the Uu communication system is avoided.

With reference to the fifth aspect, optionally, the configuration information may be predefined or (pre)configured in the first terminal device. For example, the configuration information is indicated by the first network device to the first terminal device, or the configuration information is indicated by a third terminal device to the first terminal device. That the configuration information is indicated by the first network device to the first terminal device may be understood as, for example: The configuration information is indicated by the first network device to the first terminal device by using RRC signaling. That the configuration information is indicated by the third terminal device to the first terminal device may be understood as, for example: The configuration information is indicated by the third terminal device to the first terminal device by using MAC CE signaling or SCI signaling. The first terminal device performs SL transmission with the third terminal device. For example, the first terminal device sends SL data to the third terminal device on the second resource.

In a possible implementation, the common reference signal may be, for example, a sequence, such as a pseudo-random sequence, or may be a combination, a variant, or the like of a sequence. In another possible implementation, the common reference signal may be, for example, a reference signal encoded by the first network device based on a sequence, and the reference signal encoded by the first network device based on the sequence may include, for example, an identifier of the first network device.

With reference to the fifth aspect, optionally, the method further includes: The first terminal device measures the common reference signal based on a periodicity and an offset of the periodicity. The periodicity and the offset of the periodicity are predefined or preconfigured. For example, the periodicity and the offset of the periodicity are predefined or preconfigured in the first terminal device. Alternatively, the periodicity and the offset of the periodicity are indicated by the first network device to the first terminal device, or the periodicity and the offset of the periodicity are indicated by the third terminal device to the first terminal device. In this way, the first terminal device does not need to repeatedly receive an instruction for measuring the common reference signal, thereby reducing signaling overheads and power consumption of measurement.

With reference to the fifth aspect, optionally, the method further includes: The first terminal device receives first signaling from the network device or the third terminal device. The first signaling indicates the first terminal device to measure the common reference signal. The first signaling further includes a start time and/or a duration for measuring the common reference signal by the first terminal device. This indicates that the network device or the third terminal device may dynamically indicate the first terminal device to measure the common reference signal, thereby improving flexibility of measuring the common reference signal.

With reference to the fifth aspect, optionally, the method further includes: A higher layer of the first terminal device sends second signaling to a physical layer of the first terminal device. The higher layer of the first terminal device includes an RRC layer or a MAC layer, and the second signaling indicates the physical layer of the first terminal device to measure the common reference signal. The second signaling further includes a start time and/or a duration for measuring the common reference signal by the physical layer of the first terminal device. This indicates that measurement on the common reference signal may be triggered by the higher layer of the first terminal device, and this can meet a requirement of the first terminal device.

With reference to the fifth aspect, optionally, the method further includes: The first terminal device determines, based on third signaling, that the configuration information takes effect, for example, determining, based on a first field in the third signaling, that the configuration information takes effect. Specifically, when the first field indicates enable, active, available, or true, or a bit value corresponding to the first field is "1 ", the configuration information takes effect, indicating that a resource configured by using the configuration information may be used to carry the common reference signal. When the first field indicates disable, deactive, unavailable, or false, or the bit value corresponding to the first field is "0", the configuration information does not take effect, indicating that the resource configured by using the configuration information may be used to carry data. For another example, when the third signaling includes a first field, the configuration information takes effect, indicating that the resource configured by using the configuration information may be used to carry the common reference signal. When the third signaling does not include a first field, the configuration information does not take effect, indicating that the resource configured by using the configuration information may be used to carry data.

According to a sixth aspect, a communication method is provided, including: A second terminal device determines a first resource based on configuration information. When a first condition is met, the second terminal device sends a common reference signal on the first resource. The first condition includes at least one of the following: the second terminal device has to-be-sent data, or the second terminal device receives second indication information sent by a second network device. The second indication information indicates the second terminal device to send the common reference signal. The second terminal device is a terminal device that performs uplink transmission with the second network device. The to-be-sent data of the second terminal device may include, for example, one or more of a physical uplink shared channel (physical uplink shared channel, PUSCH), a physical uplink control channel (physical uplink control channel, PUCCH), or the like. As can be learned, when having to-be-sent data, the second terminal device may send the common reference signal on the first resource, which indicates that the second terminal device may actively send the common reference signal when intending to send data. Alternatively, when receiving the second indication information of the second network device, the second terminal device may send the common reference signal, which indicates that the second network device may trigger the second terminal device to send the common reference signal, thereby improving flexibility of sending the common reference signal.

With reference to the sixth aspect, optionally, the configuration information may be predefined or (pre) configured in the second terminal device. For example, the configuration information is indicated by the second network device to the second terminal device. That the configuration information is indicated by the second network device to the second terminal device may be understood as, for example: The configuration information is indicated by the second network device to the second terminal device by using RRC signaling.

With reference to the sixth aspect, optionally, the first resource does not overlap a third resource, and the third resource includes a resource used by the second terminal device to send a reference signal. The reference signal sent by the second terminal device may include, for example, at least one of the following: a DMRS, a PTRS, or a sounding reference signal (sounding reference signal, SRS). The DMRS sent by the second terminal device may include, for example, at least one of the following: a DMRS for PUSCH or a DMRS for PUCCH. The PTRS sent by the second terminal device may include, for example, a PTRS carried on a PUSCH. When the first resource does not overlap a resource used by the second terminal device to send the DMRS, it is ensured that communication between devices is not affected. When the first resource does not overlap a resource used by the second terminal device to send the PTRS, phase estimation is not affected. When the first resource does not overlap a resource used by the second terminal device to send the SRS, positioning or channel measurement implemented by using the SRS is not affected.

With reference to the sixth aspect, optionally, the method further includes: The second terminal device determines, based on fourth signaling, that the configuration information takes effect, for example, determining, based on a second field in the fourth signaling, that the configuration information takes effect. Specifically, when the second field indicates enable, active, available, or true, or a bit value corresponding to the second field is "1", the configuration information takes effect, indicating that a resource configured by using the configuration information may be used to carry the common reference signal. When the second field indicates disable, deactive, unavailable, or false, or the bit value corresponding to the second field is "0", the configuration information does not take effect, indicating that the resource configured by using the configuration information may be used to carry data. For another example, when the fourth signaling includes a second field, the configuration information takes effect, indicating that the resource configured by using the configuration information may be used to carry the common reference signal. When the fourth signaling does not include a second field, the configuration information does not take effect, indicating that the resource configured by using the configuration information may be used to carry data.

According to a seventh aspect, a communication method is provided, including: A first network device receives a signal measurement result from a first terminal device. The signal measurement result is obtained by the first terminal device by measuring a common reference signal. The first network device determines a second resource based on the signal measurement result. The first network device sends first indication information to the first terminal device. The first indication information indicates the first terminal device to send SL data on the second resource. As can be learned, the first terminal device that performs SL transmission may sense interference from a Uu communication system by identifying the common reference signal sent by a second terminal device, and may further notify the first network device of a magnitude of the interference. Further, the first network device may further determine the second resource based on the signal measurement result, and send, to the first terminal device, the first indication information for sending the SL data on the second resource, which indicates that the first network device may determine an available second resource based on the magnitude of the interference from the Uu communication system, so that the first terminal device sends the SL data on the second resource without interference, that is, interference between an SL communication system and the Uu communication system is avoided.

With reference to the seventh aspect, optionally, the method further includes: The first network device sends first signaling to the first terminal device. The first signaling indicates the first terminal device to measure the common reference signal. The first signaling further includes a start time and/or a duration for measuring the common reference signal by the first terminal device. This indicates that the first network device may dynamically indicate the first terminal device to measure the common reference signal, thereby improving flexibility of measuring the common reference signal.

According to an eighth aspect, a communication method is provided, including: A first terminal device determines a first resource based on configuration information. The first terminal device receives a common reference signal from a second terminal device on the first resource. The first terminal device measures the common reference signal to obtain a signal measurement result. The first terminal device sends SL data on a second resource based on the signal measurement result. A time domain resource of the first resource is located before a time domain resource of the second resource. As can be learned, the first terminal device sends the SL data on the second resource based on the signal measurement result, which indicates that the first terminal device is a device that performs SL transmission. The first terminal device may receive, on the first resource determined based on the configuration information, the common reference signal sent by the second terminal device (the second terminal device is a terminal device that performs uplink transmission with the first network device), to obtain the signal measurement result, and send the SL data on the second resource based on the signal measurement result. Therefore, the first terminal device that performs SL transmission may sense interference from a Uu communication system by identifying the common reference signal sent by the second terminal device, and may further determine an available second resource based on a magnitude of the interference, so that the first terminal device sends the SL data on the second resource without interference, that is, interference between an SL communication system and the Uu communication system is avoided.

With reference to the eighth aspect, optionally, the configuration information may be predefined or preconfigured in the first terminal device, or the configuration information is indicated by a second network device to the first terminal device, or the configuration information is indicated by a third terminal device to the first terminal device. That the configuration information is indicated by the second network device to the first terminal device may be understood as, for example: The configuration information is indicated by the second network device to the first terminal device by using RRC signaling. That the configuration information is indicated by the third terminal device to the first terminal device may be understood as, for example: The configuration information is indicated by the third terminal device to the first terminal device by using RRC signaling, MAC CE signaling, or SCI signaling. The first terminal device performs SL transmission with the third terminal device. For example, the first terminal device sends the SL data to the third terminal device on the second resource.

In a possible implementation, the common reference signal may be, for example, a sequence, such as a pseudo-random sequence, or may be a combination, a variant, or the like of a sequence. In another possible implementation, the common reference signal may be, for example, a reference signal encoded by the second terminal device based on a sequence, and the reference signal encoded by the second terminal device based on the sequence may include, for example, an identifier of the second terminal device.

With reference to the eighth aspect, optionally, that the first terminal device determines the first resource based on the configuration information includes: The first terminal device determines the first resource based on the configuration information and the second resource. A frequency domain resource of the second resource includes a frequency domain resource of the first resource.

With reference to the eighth aspect, optionally, that the first terminal device sends the SL data on the second resource based on the signal measurement result includes: When the signal measurement result is less than or equal to a first threshold, the first terminal device sends the SL data by using the second resource. The frequency domain resource of the second resource includes the frequency domain resource of the first resource. As can be learned, when the signal measurement result is less than or equal to the first threshold, it means that a distance between the first terminal device and the second network device is greater than or equal to a first distance, and even if both the first terminal device and the second network device use the second resource to send data, mutual interference does not occur.

The first distance may be predefined or (pre) configured in the first terminal device. For example, the first distance is indicated by the second network device to the first terminal device, or the first distance is indicated by the third terminal device to the first terminal device. That the first distance is indicated by the second network device to the first terminal device may be understood as, for example: The first distance is indicated by the second network device to the first terminal device by using RRC signaling, MAC CE signaling, or DCI signaling. The signaling is sent by using a downlink transport channel. That the first distance is indicated by the third terminal device to the first terminal device may be understood as, for example: The first distance is indicated by the third terminal device to the first terminal device by using RRC signaling, MAC CE signaling, or SCI signaling. The signaling is sent by using a sidelink transport channel.

With reference to the eighth aspect, optionally, that the first terminal device determines the first resource based on the configuration information includes: The first terminal device determines the first resource based on the configuration information and the second resource. A frequency domain resource of the second resource does not overlap a frequency domain resource of the first resource.

With reference to the eighth aspect, optionally, that the first terminal device sends the SL data on the second resource based on the signal measurement result includes: When the signal measurement result is greater than or equal to a second threshold, the first terminal device sends the SL data by using the second resource. The frequency domain resource of the second resource does not overlap the frequency domain resource of the first resource. As can be learned, when the signal measurement result is greater than or equal to the second threshold, it means that a distance between the first terminal device and the second network device is less than or equal to a second distance. In this case, if the first terminal device and the second network device send data by using an overlapping frequency domain resource at the same time, mutual interference easily occurs. Therefore, to avoid mutual interference between transmission of the two, the first terminal device may actively avoid the frequency domain resource included in the first resource, and send data by using the second resource that does not overlap the frequency domain resource of the first resource.

The second distance may be predefined or (pre) configured in the first terminal device. For example, the second distance is indicated by the second network device to the first terminal device, or the second distance is indicated by the third terminal device to the first terminal device. That the second distance is indicated by the second network device to the first terminal device may be understood as, for example: The second distance is indicated by the second network device to the first terminal device by using RRC signaling, MAC CE signaling, or DCI signaling. The signaling is sent by using a downlink transport channel. That the second distance is indicated by the third terminal device to the first terminal device may be understood as, for example: The second distance is indicated by the third terminal device to the first terminal device by using RRC signaling, MAC CE signaling, or SCI signaling. The signaling is sent by using a sidelink transport channel. Optionally, the first distance and the second distance may be the same or different.

With reference to the eighth aspect, optionally, the method further includes: The first terminal device measures the common reference signal based on a periodicity and an offset of the periodicity. The periodicity and the offset of the periodicity are predefined or preconfigured. For example, the periodicity and the offset of the periodicity are predefined or preconfigured in the first terminal device. Alternatively, the periodicity and the offset of the periodicity are indicated by the second network device to the first terminal device, or the periodicity and the offset of the periodicity are indicated by the third terminal device to the first terminal device. In this way, the first terminal device does not need to repeatedly receive an instruction for measuring the common reference signal, thereby reducing signaling overheads and power consumption of measurement.

With reference to the eighth aspect, optionally, the method further includes: The first terminal device receives first signaling from the second network device or the third terminal device. The first signaling indicates the first terminal device to measure the common reference signal. The first signaling further includes a start time and/or a duration for measuring the common reference signal by the first terminal device. This indicates that the second network device or the third terminal device may dynamically indicate the first terminal device to measure the common reference signal, thereby improving flexibility of measuring the common reference signal.

With reference to the eighth aspect, optionally, the method further includes: A higher layer of the first terminal device sends second signaling to a physical layer of the first terminal device. The higher layer of the first terminal device includes an RRC layer or a MAC layer, and the second signaling indicates the physical layer of the first terminal device to measure the common reference signal. The second signaling further includes a start time and/or a duration for measuring the common reference signal by the physical layer of the first terminal device. This indicates that measurement on the common reference signal may be triggered by the higher layer of the first terminal device, and this can meet a requirement of the first terminal device.

With reference to the eighth aspect, optionally, the method further includes: The first terminal device determines, based on third signaling, that the configuration information takes effect, for example, determining, based on a first field in the third signaling, that the configuration information takes effect. Specifically, when the first field indicates enable, active, available, or true, or a bit value corresponding to the field is "1", the configuration information takes effect, indicating that a resource configured by using the configuration information may be used to carry the common reference signal. When the first field indicates disable, deactive, unavailable, or false, or the bit value corresponding to the first field is "0", the configuration information does not take effect, indicating that the resource configured by using the configuration information may be used to carry data. For another example, when the third signaling includes a first field, the configuration information takes effect, indicating that the resource configured by using the configuration information may be used to carry the common reference signal. When the third signaling does not include a first field, the configuration information does not take effect, indicating that the resource configured by using the configuration information may be used to carry data.

According to a ninth aspect, a communication method is provided, including: A second terminal device determines a first resource based on configuration information. When a first condition is met, the second terminal device sends a common reference signal on the first resource. The first condition includes at least one of the following: the second terminal device has to-be-sent data, or the second terminal device receives second indication information sent by a first network device. The second indication information indicates the second terminal device to send the common reference signal. The second terminal device is a terminal device that performs uplink transmission with the first network device. The to-be-sent data of the second terminal device may include, for example, one or more of a PUSCH, a PUCCH, or the like. As can be learned, when having to-be-sent data, the second terminal device may send the common reference signal on the first resource, which indicates that the second terminal device may actively send the common reference signal when intending to send data. Alternatively, when receiving the second indication information of the first network device, the second terminal device may send the common reference signal, which indicates that the first network device may trigger the second terminal device to send the common reference signal, thereby improving flexibility of sending the common reference signal.

With reference to the ninth aspect, optionally, the configuration information may be predefined or (pre) configured in the second terminal device. For example, the configuration information is indicated by the first network device to the second terminal device. That the configuration information is indicated by the first network device to the second terminal device may be understood as, for example: The configuration information is indicated by the first network device to the second terminal device by using RRC signaling.

With reference to the ninth aspect, optionally, the first resource does not overlap a third resource, and the third resource includes a resource used by the second terminal device to send a reference signal. The reference signal sent by the second terminal device may include, for example, at least one of the following: a DMRS, a PTRS, or an SRS. The DMRS sent by the second terminal device may include, for example, at least one of the following: a DMRS for PUSCH or a DMRS for PUCCH. The PTRS sent by the second terminal device may include, for example, a PTRS carried on a PUSCH. When the first resource does not overlap a resource used by the second terminal device to send the DMRS, it is ensured that communication between devices is not affected. When the first resource does not overlap a resource used by the second terminal device to send the PTRS, phase estimation is not affected. When the first resource does not overlap a resource used by the second terminal device to send the SRS, positioning or channel measurement implemented by using the SRS is not affected.

With reference to the ninth aspect, optionally, the method further includes: The second terminal device determines, based on fourth signaling, that the configuration information takes effect, for example, determining, based on a second field in the fourth signaling, that the configuration information takes effect. Specifically, when the second field indicates enable, active, available, or true, or a bit value corresponding to the second field is "1", the configuration information takes effect, indicating that a resource configured by using the configuration information may be used to carry the common reference signal. When the second field indicates disable, deactive, unavailable, or false, or the bit value corresponding to the second field is "0", the configuration information does not take effect, indicating that the resource configured by using the configuration information may be used to carry data. For another example, when the fourth signaling includes a second field, the configuration information takes effect, indicating that the resource configured by using the configuration information may be used to carry the common reference signal. When the fourth signaling does not include a second field, the configuration information does not take effect, indicating that the resource configured by using the configuration information may be used to carry data.

According to a tenth aspect, a communication method is provided, including: A network device receives a common reference signal from a first terminal device on a first resource. The network device measures the common reference signal to obtain a signal measurement result. The network device receives/sends data on a second resource based on the signal measurement result. A time domain resource of the first resource is located before a time domain resource of the second resource. As can be learned, the network device may receive, on the first resource determined based on configuration information, the common reference signal sent by the first terminal device (the first terminal device is a terminal device that performs SL transmission), to obtain the signal measurement result, and receive or send the data on the second resource based on the signal measurement result. Therefore, the network device may sense interference from an SL communication system by identifying the common reference signal sent by the first terminal device, and may further determine an available second resource based on a magnitude of the interference, so that the network device receives/sends the data on the second resource without interference, that is, interference between the SL communication system and a Uu communication system is avoided.

In a possible implementation, the common reference signal may be, for example, a sequence, such as a pseudo-random sequence, or may be a combination, a variant, or the like of a sequence. In another possible implementation, the common reference signal may be, for example, a reference signal encoded by the first terminal device based on a sequence, and the reference signal encoded by the first terminal device based on the sequence may include, for example, an identifier of the first terminal device.

With reference to the tenth aspect, optionally, that the network device receives/sends the data on the second resource based on the signal measurement result includes: When the signal measurement result is less than or equal to a first threshold, the network device receives/sends the data by using the second resource. A frequency domain resource of the second resource includes a frequency domain resource of the first resource. As can be learned, when the signal measurement result is less than or equal to the first threshold, it means that a distance between the first terminal device and the network device is greater than or equal to a first distance, and when the first terminal device sends data by using the second resource, even if the network device is receiving/sending data by using the second resource, mutual interference does not occur.

The first distance may be predefined or (pre) configured in the network device. For example, the first distance is indicated by the first terminal device to the network device, or the first distance is indicated by the second terminal device to the first terminal device. That the first distance is indicated by the first terminal device to the network device may be understood as, for example: The first distance is indicated by the first terminal device to the network device by using RRC signaling or MAC CE signaling. The signaling is sent by using an uplink transport channel. That the first distance is indicated by the second terminal device to the network device may be understood as, for example: The first distance is indicated by the second terminal device to the network device by using RRC signaling, MAC CE signaling, or UCI signaling. The signaling is sent by using an uplink transport channel.

With reference to the tenth aspect, optionally, that the network device receives/sends the data on the second resource based on the signal measurement result includes: When the signal measurement result is greater than or equal to a second threshold, the network device receives/sends the data by using the second resource. A frequency domain resource of the second resource does not overlap a frequency domain resource of the first resource. As can be learned, when the signal measurement result is less than or equal to the first threshold, it means that a distance between the first terminal device and the network device is less than or equal to a second distance. In this case, if the first terminal device and the network device send data by using an overlapping frequency domain resource at the same time, mutual interference easily occurs. Therefore, to avoid mutual interference between transmission of the two, the network device may actively avoid the frequency domain resource included in the first resource, and receive/send data by using the second resource that does not overlap the frequency domain resource of the first resource.

The second distance may be predefined or (pre) configured in the network device. For example, the second distance is indicated by the first terminal device to the network device, or the second distance is indicated by the second terminal device to the first terminal device. That the second distance is indicated by the first terminal device to the network device may be understood as, for example: The second distance is indicated by the first terminal device to the network device by using RRC signaling or MAC CE signaling. The signaling is sent by using an uplink transport channel. That the second distance is indicated by the second terminal device to the network device may be understood as, for example: The second distance is indicated by the second terminal device to the network device by using RRC signaling, MAC CE signaling, or UCI signaling. The signaling is sent by using an uplink transport channel.

With reference to the tenth aspect, optionally, the method further includes: The network device measures the common reference signal based on a periodicity and an offset of the periodicity. The periodicity and the offset of the periodicity are predefined or preconfigured. For example, the periodicity and the offset of the periodicity are predefined or preconfigured in the network device. Alternatively, the periodicity and the offset of the periodicity are indicated by the first terminal device to the network device, or the periodicity and the offset of the periodicity are indicated by the second terminal device to the network device. In this way, the network device does not need to repeatedly receive an instruction for measuring the common reference signal, thereby reducing signaling overheads and power consumption of measurement.

With reference to the tenth aspect, optionally, the method further includes: The network device receives first signaling from the first terminal device or the second terminal device. The first signaling indicates the first terminal device to measure the common reference signal. The first signaling further includes a start time and/or a duration for measuring the common reference signal by the first terminal device. This indicates that the first terminal device or the second terminal device may dynamically indicate the network device to measure the common reference signal, thereby improving flexibility of measuring the common reference signal.

With reference to the tenth aspect, optionally, the method further includes: A higher layer of the network device sends second signaling to a physical layer of the network device. The higher layer of the network device includes an RRC layer or a MAC layer, and the second signaling indicates the physical layer of the network device to measure the common reference signal. The second signaling further includes a start time and/or a duration for measuring the common reference signal by the physical layer of the network device. This indicates that measurement on the common reference signal may be triggered by the higher layer of the network device, and this can meet a requirement of the network device.

According to an eleventh aspect, a communication method is provided, including: A first terminal device determines a first resource based on configuration information. When a first condition is met, the first terminal device sends a common reference signal to a network terminal device on the first resource. The first condition includes at least one of the following: the first terminal device has to-be-sent data, or the first terminal device receives second indication information sent by a third terminal device or the network device. The second indication information indicates the first terminal device to send the common reference signal. The first terminal device performs SL transmission with the third terminal device. The to-be-sent data of the first terminal device may include, for example, one or more of a PSSCH, a PSCCH, or the like. As can be learned, when having to-be-sent data, the first terminal device may send the common reference signal on the first resource, which indicates that the first terminal device may actively send the common reference signal when intending to send data. Alternatively, when receiving the second indication information of the third terminal device or the network device, the first terminal device may send the common reference signal, which indicates that the third terminal device may trigger the first terminal device to send the common reference signal, thereby improving flexibility of sending the common reference signal.

With reference to the eleventh aspect, optionally, the configuration information may be predefined or preconfigured in the first terminal device, or the configuration information is indicated by the network device to the first terminal device, or the configuration information is indicated by the third terminal device to the first terminal device. That the configuration information is indicated by the network device to the first terminal device may be understood as, for example: The configuration information is indicated by the network device to the first terminal device by using RRC signaling. That the configuration information is indicated by the third terminal device to the first terminal device may be understood as, for example: The configuration information is indicated by the third terminal device to the first terminal device by using RRC signaling.

With reference to the eleventh aspect, optionally, the first resource does not overlap a third resource, and the third resource includes at least one of the following: any resource in a control resource set of the first terminal device, or a resource used by the first terminal device to send a reference signal. The reference signal sent by the first terminal device may include, for example, at least one of the following: a DMRS, an S-SSB, or a CSI-RS. The DMRS sent by the first terminal device may include, for example, at least one of the following: a DMRS for PSSCH or a DMRS for PSCCH. The CSI-RS sent by the first terminal device may include, for example, an NZP CSI-RS. When the first resource does not overlap any resource in the control resource set of the first terminal device, or the first resource does not overlap a resource used by the first terminal device to send the DMRS and/or the S-SSB, it is ensured that communication between devices is not affected. When the first resource does not overlap a resource used by the first terminal device to send the CSI-RS, it can be ensured that determining of transmit power is not affected.

With reference to the eleventh aspect, optionally, the method further includes: The first terminal device determines, based on third signaling, that the configuration information takes effect, for example, determining, based on a first field in the third signaling, that the configuration information takes effect. Specifically, when the second field indicates enable, active, available, or true, or a bit value corresponding to the second field is "1", the configuration information takes effect, indicating that a resource configured by using the configuration information may be used to carry the common reference signal. When the second field indicates disable, deactive, unavailable, or false, or the bit value corresponding to the second field is "0", the configuration information does not take effect, indicating that the resource configured by using the configuration information may be used to carry data. For another example, when the third signaling includes a first field, the configuration information takes effect, indicating that the resource configured by using the configuration information may be used to carry the common reference signal. When the third signaling does not include a first field, the configuration information does not take effect, indicating that the resource configured by using the configuration information may be used to carry data.

With reference to any one of the first aspect to the sixth aspect or the eighth aspect to the eleventh aspect, optionally, the configuration information indicates that a time-frequency position of the common reference signal includes: $\{k_0, l_0+N_1\}$, $\{k_0, l_0+N_2\}$, ..., and $\{k_0, l_0+N_p\}$. $k_0$ is a time domain position of the common reference signal, $l_0+N_1$, $l_0+N_2$, ..., and $l_0+N_p$ are frequency domain positions of the common reference signal, $N_i = n*N_{i-1}$ or $N_i = H+N_{i-1}$, $i$ is an integer greater than or equal to 1 and less than or equal to $p$, $p$ is an integer greater than or equal to 1, $n$ is an integer greater than or equal to 0, $H$ is an integer greater than or equal to 0, and when $i$ is 1, $N_{i-1}$ is an integer greater than or equal to 0. Optionally, the configuration information indicates that the time-frequency position of the common reference signal may further include $\{k_0, l_0+N_0\}$. $l_0+N_0$ is a frequency domain position of the common reference signal, and $N_0$ is an integer greater than or equal to 0.

With reference to any one of the first aspect to the sixth aspect or the eighth aspect to the eleventh aspect, optionally, the configuration information indicates that a time-frequency position of the common reference signal includes: $\{k_0+N_1, l_0\}$, $\{k_0+N_2, l_0\}$, ..., and $\{k_0+N_p, l_0\}$. $k_0+N_1$, $k_0+N_2$, ..., and $k_0+N_p$ are time domain positions of the common reference signal, $l_0$ is a frequency domain position of the common reference signal, $N_i = n*N_{i-1}$ or

$N_i$=H+$N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0. Optionally, the configuration information indicates that the time-frequency position of the common reference signal may further include $\{k_0+N_0, I_0\}$. $k_0+N_0$ is a time domain position of the common reference signal, and $N_0$ is an integer greater than or equal to 0.

With reference to any one of the first aspect to the sixth aspect or the eighth aspect to the eleventh aspect, optionally, the configuration information indicates that a time-frequency position of the common reference signal includes: $\{\{k_0, I_0+N_0\}, \{k_0, I_0+N_1\}, \{k_0, I_0+N_2\}, ..., \{k_0, I_0+N_p\}\}, \{\{k_1, I_0+N_0\}, \{k_1, I_0+N_1\}, \{k_1, I_0+N_2\}, ..., \{k_1, I_0+N_p\}\}, ..., $ and $\{\{k_q, I_0+N_0\}, \{k_q, I_0+N_1\}, \{k_q, I_0+N_2\}, ..., \{k_q, I_0+N_p\}\}$. $k_0, k_1, ...,$ and $k_q$ are time domain positions of the common reference signal, and $I_0+N_0, I_0+N_1, I_0+N_2, ...,$ and $I_0+N_p$ are frequency domain positions of the common reference signal. In a possible implementation, $N_i$=n*$N_{i-1}$, and $k_j$=n*$k_{j-1}$ or $k_j$=1+$k_{j-1}$. In another possible implementation, $N_i$=H+$N_{i-1}$, and $k_j$=n*$k_{j-1}$ or $k_j$=G+$k_{j-1}$. $i$ is an integer greater than or equal to 1 and less than or equal to $p$, $p$ is an integer greater than or equal to 1, $j$ is an integer greater than or equal to 1 and less than or equal to $q$, $q$ is an integer greater than or equal to 1, H is an integer greater than or equal to 0, G is an integer greater than or equal to 0, when $i$ is 1, $N_{i-1}$ is an integer greater than or equal to 0, when $j$ is $1$, $N_{j-1}$ is an integer greater than or equal to 0, and n is an integer greater than or equal to 0. Optionally, the configuration information indicates that the time-frequency position of the common reference signal may alternatively be represented as follows: $\{\{k_0, I_0+N_0\}\}, \{\{k_1, I_0+N_0\}\}, ...,$ and $\{\{k_q, I_0+N_0\}\}$. $k_0$ is a time domain position of the common reference signal, $I_0+N_0$ is a frequency domain position of the common reference signal, and $N_0$ is an integer greater than or equal to 0.

According to a twelfth aspect, a communication apparatus is provided. The communication apparatus includes a module configured to perform the method according to any one of the first aspect to the eleventh aspect.

According to a thirteenth aspect, a communication apparatus is provided, including a processor. The processor is coupled to a memory, and the memory stores a computer program. The processor is configured to invoke the computer program in the memory, to enable the communication apparatus to perform the method according to any one of the first aspect to the eleventh aspect.

According to a fourteenth aspect, this application provides a communication apparatus, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method according to any one of the first aspect to the eleventh aspect by using a logic circuit or executing code instructions.

According to a fifteenth aspect, this application provides a computer-readable storage medium. The storage medium stores a computer program or instructions. When the computer program or the instructions are executed by a computer, the method according to any one of the first aspect to the eleventh aspect is implemented.

According to a sixteenth aspect, a computer program product is provided. When a computer reads and executes the computer program product, the computer is enabled to perform the method according to any one of the first aspect to the eleventh aspect.

According to a seventeenth aspect, a communication system is provided, including a first terminal device configured to perform the method according to any one of the first aspect, the third aspect, or the eleventh aspect, and/or a network device configured to perform the method according to any one of the second aspect, the fourth aspect, or the tenth aspect.

According to an eighteenth aspect, a communication system is provided, including at least one of the following: a first terminal device configured to perform the method according to the fifth aspect, a second terminal device configured to perform the method according to the sixth aspect, and a first network device configured to perform the method according to the seventh aspect.

According to a nineteenth aspect, a communication system is provided, including at least one of the following: a first terminal device configured to perform the method according to the eighth aspect, and a second terminal device configured to perform the method according to the ninth aspect.

According to a twentieth aspect, a chip is provided. The chip includes at least one processor, a memory, and an interface circuit. The interface circuit is configured to provide information input/output for the at least one processor. The memory stores a computer program. When the computer program runs on one or more processors, the method according to any one of the first aspect to the eleventh aspect is implemented.

**BRIEF DESCRIPTION OF DRAWINGS**

The following briefly describes accompanying drawings used in describing embodiments.

FIG. 1 shows a basic architecture of a communication system according to an embodiment of this application;

FIG. 2 is a diagram of a hardware structure of a communication apparatus that may be used in an embodiment of this application;

FIG. 3 is a schematic flowchart of a communication method according to an embodiment of this application;

FIG. 4A shows a time-frequency position, indicated in configuration information, of a common reference signal according to an embodiment of this application;

FIG. 4B shows another time-frequency position, indicated in configuration information, of a common reference signal according to an embodiment of this application;

FIG. 4C shows another time-frequency position, indicated in configuration information, of a common reference signal according to an embodiment of this application;

FIG. 5 is a diagram of time domain resources and frequency domain resources of a common reference signal in DL, SL, and UL slot structures respectively according to an embodiment of this application;

FIG. 6 is a diagram of periodically measuring a common reference signal according to an embodiment of this application;

FIG. 7 is a diagram of dynamically triggering measurement on a common reference signal according to an embodiment of this application;

FIG. 8 is a schematic flowchart of another communication method according to an embodiment of this application;

FIG. 9 is a diagram of resource selection according to an embodiment of this application;

FIG. 10 is a schematic flowchart of another communication method according to an embodiment of this application;

FIG. 11 is a schematic flowchart of another communication method according to an embodiment of this application;

FIG. 12 is a schematic flowchart of another communication method according to an embodiment of this application;

FIG. 13 is another diagram of resource selection according to an embodiment of this application;

FIG. 14 is a diagram of a structure of a communication apparatus according to an embodiment of this application;

FIG. 15 is a diagram of a simplified structure of a terminal device according to an embodiment of this application; and

FIG. 16 is a diagram of a simplified structure of a network device according to an embodiment of this application.

## DESCRIPTION OF EMBODIMENTS

It should be understood that technical solutions in embodiments of this application may be applied to a long term evolution (long term evolution, LTE) architecture, a 5th generation mobile communication technology (5th generation mobile network, 5G), a WLAN system, a V2X communication system, and the like. The technical solutions in embodiments of this application may also be applied to another communication system in the future, for example, a 6G communication system. In the future communication system, a same function may be maintained, but a name may be changed.

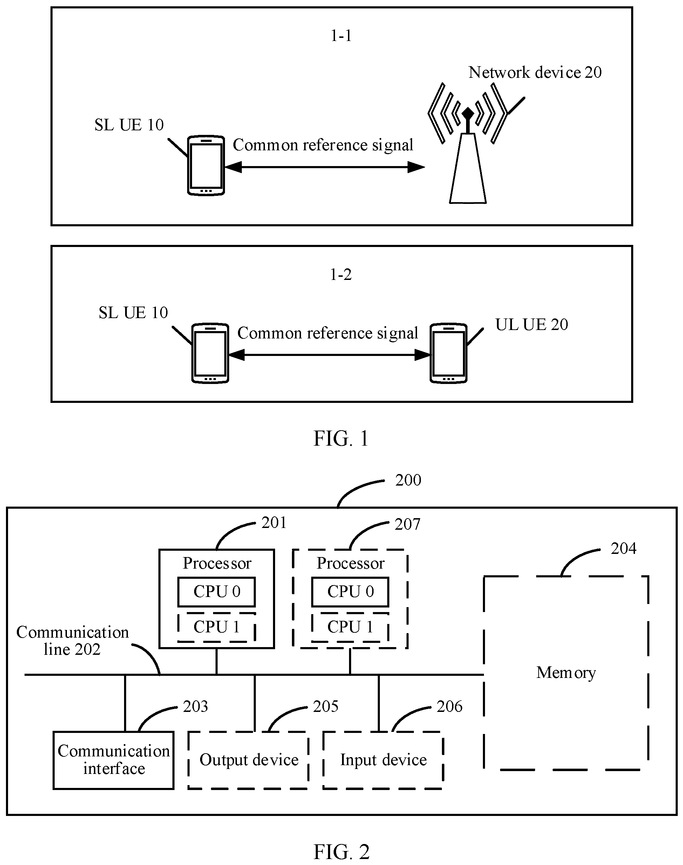

The following describes a basic architecture of a communication system provided in an embodiment of this application. FIG. 1 shows a basic architecture of a communication system according to an embodiment of this application.

In 1-1 of FIG. 1, the communication system may include, for example, an SL user equipment (user equipment, UE) 10 and a network device 20. The network device 20 may receive a common reference signal sent by the SL UE 10, and the SL UE 10 may receive a common reference signal sent by the network device 20. It should be noted that there may be one or more SL UEs 10, and there may be one or more network devices 20. One SL UE 10 may receive a common reference signal sent by one or more network devices 20, and one network device 20 may receive a common reference signal sent by one or more SL UEs. Certainly, an uplink (uplink, UL) UE may also receive a common reference signal sent by one or more network devices 20.

In 1-2 of FIG. 1, the communication system may include, for example, an SL UE 10 and a UL UE 20. The SL UE 10 may receive a common reference signal sent by the UL UE 20, and the UL UE 20 may receive a common reference signal sent by the SL UE 10. It should be noted that, the SL UE 10 and the UL UE 20 may be, for example, located in coverage of a same network device. This means that the SL UE 10 and the UL UE 20 may further receive a common reference signal sent by the same network device, and the network device may receive the common reference signals sent by the SL UE 10 and the UL UE 20. Alternatively, the SL UE 10 and the UL UE 20 may be, for example, located in coverage of different network devices. This means that the SL UE 10 and the UL UE 20 may respectively receive common reference signals sent by the different network devices, a network device in a cell in which the SL UE 10 is located may receive the common reference signal sent by the SL UE 10, and a network device in a cell in which the UL UE 20 is located may receive the common reference signal sent by the UL UE 20. Alternatively, the SL UE 10 is located within coverage of a network device, and the UL UE 20 is located outside the coverage of the network device. This means that the SL UE 10 may receive a common reference signal sent by the network device, and the network device in a cell in which the SL UE 10 is located may receive the common reference signal sent by the SL UE 10. Alternatively, the SL UE 10 is located outside coverage of a network device, and the UL UE 20 is located within the coverage of the network device. This means that the UL UE 20 may receive a common reference signal sent by the network device, and the network device in a cell in which the UL UE 20 is located may receive the common reference signal sent by the UL UE 20. Alternatively, both the SL UE 10 and the UL UE 20 are located outside coverage of a network device.

It should be noted that the SL UE in FIG. 1 may also be understood as a terminal device that performs SL transmission, and the UL UE may also be understood as a terminal device that performs uplink transmission with a network device. In addition, FIG. 1 is merely a diagram, and does not constitute a limitation on a scenario to which the technical solutions provided in this application are applicable.

The network device in embodiments of this application may be a terrestrial network (terrestrial network, TN) device or a non-terrestrial network (non-terrestrial network, NTN) device.

The terrestrial network device is a network side entity configured to send signals, or receive signals, or send and receive signals. The terrestrial network device may be an apparatus that is deployed in a radio access network (radio access network, RAN) to provide a wireless communication function for a terminal device, for example, may be a transmission reception point (transmission reception point, TRP), a base station, or control nodes in various forms, for example, a network controller, a radio controller, or a radio controller in a cloud radio access network (cloud radio access network, CRAN) scenario. Specifically, the terrestrial network device may be in various forms such as a macro base station, a micro base station (also referred to as a small station), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a mobile switching center, a satellite, or an unscrewed aerial vehicle, or may be an antenna panel of a base station. The control node may be connected to a plurality of base stations, and configure resources for a plurality of terminals covered by the plurality of base stations. A device with a base station function may have different names in systems using different radio access technologies, for example, may be a gNB in 5G, a network side device in a network after 5G, a terrestrial network device in a future evolved public land mobile (communication) network (public land mobile network, PLMN), or a device that undertakes a base station function in device-to-device (Device-to-Device, D2D) communication, machine-to-machine (Machine-to-Machine, M2M) communication, or internet-of-vehicles communication. A specific name of the terrestrial network device is not limited in this application. In addition, the terrestrial network device may further include a distributed unit (distributed unit, DU) and a central unit (central unit, CU).

The non-terrestrial network device may provide a wireless access service for a terminal device, schedule a radio resource for a connected terminal device, provide a reliable wireless transmission protocol and a data encryption protocol, and the like. The non-terrestrial network device may be a base station used for wireless communication, such as an artificial earth satellite or a high-altitude aircraft, for example, a medium-earth-orbit (medium-earth-orbit, MEO) satellite or a low-earth-orbit (low-earth-orbit, LEO) satellite of a non-geostationary earth orbit (non-geostationary earth orbit, NGEO), or a high-altitude communication platform (high-altitude platform station, HAPS). The terrestrial network device may also have a relay forwarding function of transmitting a radio signal to a terminal device in a transparent (transparent) manner.

The terminal device in embodiments of this application is a user side entity configured to receive signals, or send signals, or receive and send signals. The terminal device may be configured to provide one or more of a voice service and a data connectivity service for a user. The terminal device may be a device that includes a wireless transceiver function and that can cooperate with a network device to provide a communication service for a user. Specifically, the terminal device may be a UE, an access terminal, a subscriber unit, a subscriber station, a mobile station, a remote station, a remote terminal, a mobile device, a terminal, a wireless communication device, a user agent, a user apparatus, or a roadside unit (roadside unit, RSU). Alternatively, the terminal device may be an uncrewed aerial vehicle, an internet-of-things (internet-of-things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, an in-vehicle device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a device-to-device (device-to-device, D2D) device, for example, an electricity meter or a water meter. Alternatively, the terminal device may be a terminal in a 5G system, or a terminal in a next-generation communication system. This is not limited in embodiments of this application.

Optionally, each device in FIG. 1 may be implemented by one device, or may be jointly implemented by a plurality of devices, or may be one functional module in one device. This is not specifically limited in embodiments of this application. It may be understood that the foregoing function may be a network element in a hardware device, or may be a software function running on dedicated hardware, or may be a virtualization function instantiated on a platform (for example, a cloud platform).

For example, each device in FIG. 1 may be implemented by using a communication apparatus 200 in FIG. 2. FIG. 2 is a diagram of a hardware structure of a communication apparatus that may be used in an embodiment of this application. The communication apparatus 200 includes at least one processor 201, a communication line 202, and at least one communication interface 203. Optionally, the communication apparatus 200 may further include a memory 204.

The processor 201 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 202 may include a path on which information is transferred between the foregoing components.

The communication interface 203 is any apparatus (such as an antenna) like a transceiver, and is configured to communicate with another device or a communication network. The another device may be, for example, a RAN. The communication network may be, for example, an ethernet or a wireless local area network (wireless local area network, WLAN).

The memory 204 may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be used to carry or store expected program code in an instruction or data structure form and that can be accessed by a computer. The memory may exist independently, and is connected to the processor by using the communication line 202. Alternatively, the memory may be integrated with the processor. Generally, the memory provided in this embodiment of this application may be non-volatile.

The memory 204 is configured to store computer-executable instructions for executing the solutions in this application, and the processor 201 controls execution. The processor 201 is configured to execute the computer-executable instructions stored in the memory 204, to implement a method provided in the following embodiment of this application.

Optionally, the computer-executable instructions in this embodiment of this application may also be referred to as application program code. This is not specifically limited in this embodiment of this application.

In a possible implementation, the processor 201 may include one or more CPUs, for example, a CPU 0 and a CPU 1 in FIG. 2.

In a possible implementation, the communication apparatus 200 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive input of a user in a plurality of manners. For example, the input device 206 may be a mouse, a keyboard, a touchscreen device, or a sensor device.

The communication apparatus 200 may be a general-purpose device or a dedicated device. During specific implementation, the communication apparatus 200 may be a desktop computer, a portable computer, a network server, a personal digital assistant (personal digital assistant, PDA), a mobile phone, a tablet computer, a wireless terminal device, an embedded device, or a device having a structure similar to that in FIG. 2. A type of the communication apparatus 200 is not limited in this embodiment of this application.

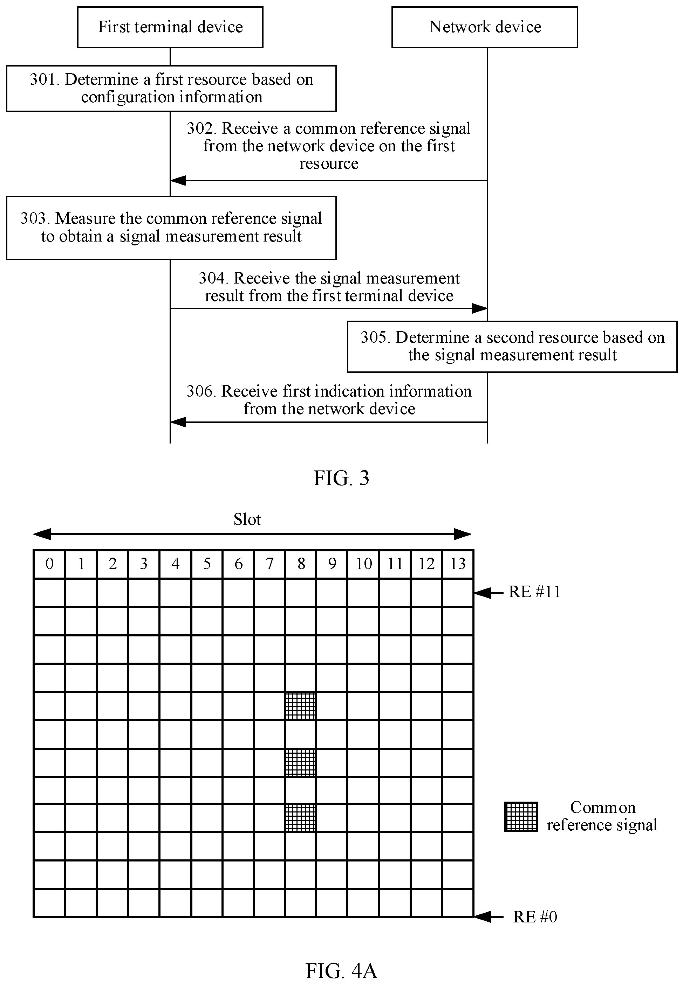

FIG. 3 is a schematic flowchart of a communication method according to an embodiment of this application. According to the method, a first terminal device that performs SL transmission may sense interference from a Uu communication system (specifically, interference caused by downlink transmission) by identifying a common reference signal sent by a network device, and may further notify the network device of a magnitude of the interference. Further, the network device may further determine a second resource based on a signal measurement result, and send, to the first terminal device, first indication information for sending SL data on the second resource, which indicates that the network device may determine an available second resource based on the magnitude, reported by the first terminal device that performs SL transmission, of the interference from the Uu communication system, so that the first terminal device sends the SL data on the second resource without interference, that is, interference between the Uu communication system and an SL communication system is avoided. As shown in FIG. 3, the method includes but is not limited to the following steps.

301. A first terminal device determines a first resource based on configuration information.

In the embodiment in FIG. 3, the first terminal device is a terminal device that performs SL transmission, and may also be referred to as an SL UE. A name of the first terminal device is not limited in this application.

In this application, the first resource may be understood as a time-frequency resource. The configuration information may be, for example, used to configure a time-frequency resource position occupied by a common reference signal in one time-frequency unit. For example, the configuration information may be used to configure one or more resource units (resource element, RE) for the common reference signal in one resource block (resource block, RB) in one slot. Alternatively, it may be understood as that the configuration information may be used to configure a pattern (pattern) of the common reference signal. Optionally, the configuration information may be predefined or (pre)configured in the first terminal device. For example, the first terminal device may obtain the configuration information after being powered on. Alternatively, the configuration information is indicated by a network device to the first terminal device, or the configuration information is indicated by a second terminal device to the first terminal device. That the configuration information is indicated by the network device to the first terminal device may be understood as, for example: The configuration information is indicated by the network device to the first terminal device by using RRC signaling. That the configuration information is sent by the second terminal device to the first terminal device may be understood as, for example: The configuration information is sent by the second terminal device to the first terminal device by using RRC signaling, MAC CE signaling, or SCI signaling. The first terminal device performs SL transmission with the second terminal device. For example, the first terminal device sends SL data to the second terminal device on a second resource.

Optionally, the method further includes: The first terminal device determines, based on third signaling, that the configuration information takes effect, for example, determining, based on a first field in the third signaling, that the configuration information takes effect. Specifically, when the first field indicates enable, active, available, or true, or a bit value corresponding to the field is "1", the configuration information takes effect, indicating that a resource configured by using the configuration information may be used to carry the common reference signal. When the first field indicates disable, deactive, unavailable, or false, or the bit value corresponding to the first field is "0", the configuration information does not take effect, indicating that the resource configured by using the configuration information may be used to carry data. For another example, when the third signaling includes a first field, the configuration information takes effect, indicating that the resource configured by using the configuration information may be used to carry the common reference signal. When the third signaling does not include a first field, the configuration information does not take effect, indicating that the resource configured by using the configuration information may be used to carry data. The third signaling may be, for example, RRC signaling, MAC CE signaling, DCI signaling, or SCI signaling. In a possible implementation, before step 301, the first terminal device may determine, based on the third signaling, that the configuration information takes effect.

In this application, the common reference signal may be, for example, a reference signal applied to a Uu communication system and an SL communication system. Alternatively, it may be understood as that the common reference signal is a reference signal applied to a Uu communication system and a PC5 communication system. Therefore, both a device (for example, a terminal device and a network device) in the Uu communication system and a device (for example, a terminal device) in the SL communication system can identify a resource position of a common reference signal from another system based on a resource mapping relationship of a common reference signal in the Uu communication system and that in the SL communication system. It should be noted that the SL is defined for direct communication between terminal devices. To be specific, the SL is a link on which terminal devices directly communicate with each other without forwarding by a base station. An interface between terminal devices may be referred to as a PC5 interface. It may be understood that, unless otherwise specified, in the present invention, a definition of the PC5 interface may be the same as that defined in the 3rd generation partnership project (3rd generation partnership project, 3GPP) standard protocol. The terminal device and the network device in the Uu communication system communicate with each other by using an air interface between the terminal device and the network device. It may be understood that, unless otherwise specified, in this application, a definition of the Uu air interface may be the same as that defined in the 3GPP standard protocol. In a possible implementation, in addition to the Uu communication system and the SL communication system, the common reference signal may be applied to another communication system, for example, a wireless local area network (wireless local area network, WLAN) system. In addition, a name of the common reference signal is not limited in this application.

Optionally, the common reference signal may have, for example, one or more of the following features:

(1). The common reference signal is a cell-level common reference signal. To be specific, a common reference signal sent by a network device may be identified by a terminal device that accesses a cell of the network device, or a terminal device served by the network device.

(2). The terminal device or the network device in the Uu communication system does not need to decode sidelink transmission or the like to obtain configuration information about the common reference signal in the SL system. The terminal device in the SL communication system does not need to decode uplink transmission or downlink transmission or the like to obtain configuration information about the common reference signal in the Uu system. That is, time-frequency resource positions defined for resource configurations of the common reference signal in the Uu and PC5 air interface communication systems are consistent, or in other words, a common reference signal resource position defined for the Uu interface overlaps a common reference signal resource position defined for the PC5 interface, or a common reference signal resource position defined in Uu interface configuration information overlaps a common reference signal resource position defined in PC5 interface configuration information.

(3). The common reference signal is a broadcast signal, and is not sent to a specific terminal device and/or network device. That is, all terminal devices and/or network devices that can obtain configuration information can receive and measure the common reference signal.

In this application, a time domain position and a frequency domain position of the common reference signal may be, for example, configured or predefined by using a higher layer parameter, which is specifically as follows:

For a quantity of symbols in a slot that are occupied by the common reference signal, for example, each common reference signal may occupy Q symbols. For example, Q is an integer greater than or equal to 1 and less than or equal to 12, or is an integer greater than or equal to 1 and less than or equal to 14. The symbol may also be referred to as an orthogonal frequency division multiplexing (orthogonal frequency division multiplexing, OFDM) symbol. A name is not limited in this application.

A time domain resource occupied by the common reference signal may be, for example, configured or predefined by using a higher layer parameter.

A frequency domain resource occupied by the common reference signal may overlap, for example, a frequency domain resource that is determined by a terminal device used in the SL communication system based on a service requirement of the terminal device, for example, partially or completely. Specifically, the frequency domain resource occupied by the common reference signal may overlap a part of or all frequency domain resources in a bandwidth part (bandwidth part, BWP) of the terminal device, or overlap a part of or all frequency domain resources in a resource pool of the terminal device, or overlap a part of or all frequency domain resources reserved by the terminal device. The reserved part of or all the reserved frequency domain resources represent a resource reserved for subsequent PSCCH and/or PSSCH transmission. For example, the common reference signal is configured for each RB in the BWP. For another example, one common reference signal is configured for every K RBs in the BWP. K is an integer greater than or equal to 1. Optionally, a density of the common reference signal in frequency domain may be represented by using a frequency density. For example, when the common reference signal is configured for each RB in the BWP, the frequency density is 1. When the common reference signal is configured at an interval of one RB in the BWP, the frequency density is 0.5.

Optionally, the configuration information may indicate a time-frequency position of the common reference signal in, for example, any one of the following manners. A specific manner may depend on a specific implementation, a pre-agreement, a definition in a standard, or the like. It should be understood that in this application, the time domain position may be understood as, for example, an absolute index of a symbol in a slot, and the frequency domain position may be understood as, for example, an absolute index or a relative index of an RE in an RB.

Manner 1.1: The configuration information indicates that the time-frequency position of the common reference signal includes: $\{k_0, l_0+N_1\}$, $\{k_0, l_0+N_2\}$, ..., and $\{k_0, l_0+N_p\}$. $k_0$ is a time domain position of the common reference signal, $l_0+N_1$, $l_0+N_2$, ..., and $l_0+N_p$ are frequency domain positions of the common reference signal, $N_i=n*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0. Optionally, the configuration information indicates that the time-frequency position of the common reference signal may further include $\{k_0, l_0+N_0\}$. $l_0+N_0$ is a frequency domain position of the common reference signal, and $N_0$ is an integer greater than or equal to 0. It should be understood that, in Manner 1.1, the common reference signal is mapped to $p$ REs in every K RBs. K is an integer greater than or equal to 1. For example, FIG. 4A shows a time-frequency position, indicated in configuration information, of a common reference signal according to an embodiment of this application. In FIG. 4A, one slot includes 14 symbols: a symbol 0 to a symbol 13, and one RB includes 12 REs: an RE #0 to an RE #11. The common reference signal occupies an RE #3, an RE #5, and an RE #7 on a symbol 8, that is, {8, 3,}, {8, 5}, and {8, 7}. $p=3$, $k_0=8$, $l_0=1$, $N_1=2$, $H=2$, $N_2=2+N_1=4$, and $N_3=2*+N_2=6$.

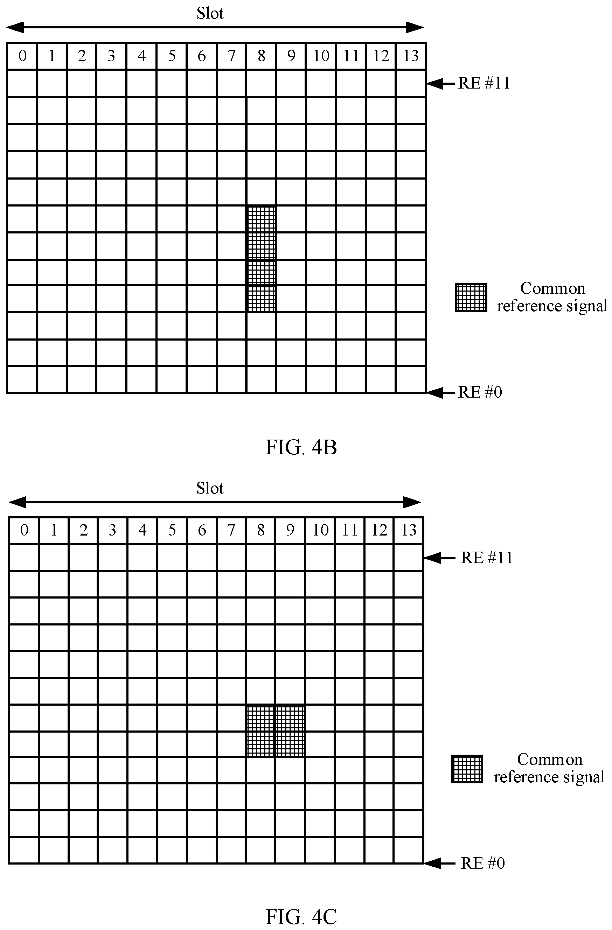

Manner 1.2: The configuration information indicates that the time-frequency position of the common reference signal includes: $\{k_0+N_1, l_0\}$, $\{k_0+N_2, l_0\}$, ..., and $\{k_0+N_p, l_0\}$. $k_0+N_1$, $k_0+N_2$, ..., and $k_0+N_p$ are time domain

positions of the common reference signal, $l_0$ is a frequency domain position of the common reference signal, $N_i$=n*$N_{i-1}$ or $N_i$=H+$N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0. Optionally, the configuration information indicates that the time-frequency position of the common reference signal may further include {$k_0$+$N_0$, $l_0$}. $k_0$+$N_0$ is a time domain position of the common reference signal, and $N_0$ is an integer greater than or equal to 0. It should be noted that in this application, that $l_0$ is a frequency domain position of the common reference signal may be understood as that $l_0$ is an absolute index of the frequency domain position of the common reference signal, or $l_0$ is a relative index of the common reference signal relative to an offset in frequency domain. A value of the offset is not limited in this application. It should be understood that, in Manner 1.2, the common reference signal is mapped to $p$ REs in every K RBs. K is an integer greater than or equal to 1. For example, FIG. 4B shows another time-frequency position, indicated in configuration information, of a common reference signal according to an embodiment of this application. In FIG. 4B, one slot includes 14 symbols: a symbol 0 to a symbol 13, and one RB includes 12 REs: an RE #0 to an RE #11. The common reference signal occupies an RE #3 to an RE #6 on a symbol 8, that is, {5, 4}, {6, 4}, {7, 4}, {8, 4}. $k_0$=4, $l_0$=4, $N_1$=1, $N_2$=1+$N_1$=2, H=1, and $p$=4.

Manner 1.3: The configuration information indicates that the time-frequency position of the common reference signal includes: {{$k_1$, $l_0$+$N_1$}, {$k_1$, $l_0$+$N_2$}, ..., {$k_1$, $l_0$+$N_p$}}, {{$k_2$, $l_0$+$N_1$}, {$k_2$, $l_0$+$N_2$}, ..., {$k_2$, $l_0$+$N_p$}}, ..., and {{$k_q$, $l_0$+$N_1$}, {$k_q$, $l_0$+$N_2$}, ..., {$k_q$, $l_0$+$N_p$}}. $k_1$, $k_2$, ..., and $k_q$ are time domain positions of the common reference signal, and $l_0$+$N_1$, $l_0$+$N_2$, ..., and $l_0$+$N_p$ are frequency domain positions of the common reference signal. In a possible implementation, $N_i$=n*$N_{i-1}$, and $k_j$=n*$k_{j-1}$ or $k_j$=G+$k_{j-1}$. In another possible implementation, $N_i$=H+$N_{i-1}$, and $k_j$=n*$k_{j-1}$ or $k_j$=G+$k_{j-1}$. $i$ is an integer greater than or equal to 1 and less than or equal to $p$, $p$ is an integer greater than or equal to 1, $j$ is an integer greater than or equal to 1 and less than or equal to $q$, $q$ is an integer greater than or equal to 1, H is an integer greater than or equal to 0, G is an integer greater than or equal to 0, when $i$ is 1, $N_{i-1}$ is an integer greater than or equal to 0, when $j$ is 1, $N_{j-1}$ is an integer greater than or equal to 0, and n is an integer greater than or equal to 0. Optionally, the configuration information indicates the time-frequency position of the common reference signal further includes: {{$k_1$, $l_0$+$N_1$}}, {{$k_2$, $l_0$+$N_1$}}, ..., and {{$k_q$, $l_0$+$N_1$}}. $k_1$, $k_2$, ..., and $k_q$ are time domain positions of the common reference signal, $l_0$+$N_1$ is a frequency domain position of the common reference signal, and $N_1$ is an integer greater than or equal to 0. Optionally, the configuration information indicates the time-frequency position of the common reference signal further includes: {'{$k_1$, $l_0$

+$N_1$}, {$k_1$, $l_0$+$N_2$}, ..., {$k_1$, $l_0$+$N_p$}'}. $k_1$ is a time domain position of the common reference signal, $l_0$+$N_1$, $l_0$+$N_2$, ..., and $l_0$+$N_p$ are frequency domain positions of the common reference signal, and $N_1$ is an integer greater than or equal to 0. It should be understood that, in Manner 1.3, the common reference signal is mapped to $p$*$q$ REs in every K RBs. For example, FIG. 4C shows another time-frequency position, indicated in configuration information, of a common reference signal according to an embodiment of this application. In FIG. 4C, one slot includes 14 symbols: a symbol 0 to a symbol 13, and one RB includes 12 REs: an RE #0 to an RE #11. The common reference signal occupies an RE #3 and an RE #4 on a symbol 8, and an RE #3 and an RE #4 on a symbol 9, that is, {8, 3,}, {8, 4,}, {9, 3}, and {9, 4}. $k_1$=8, $k_2$=1+$k_1$=9, $l_0$=2, $N_1$=1, $N_2$=1+$N_1$=2, $p$=$q$=2, and G=H=1.

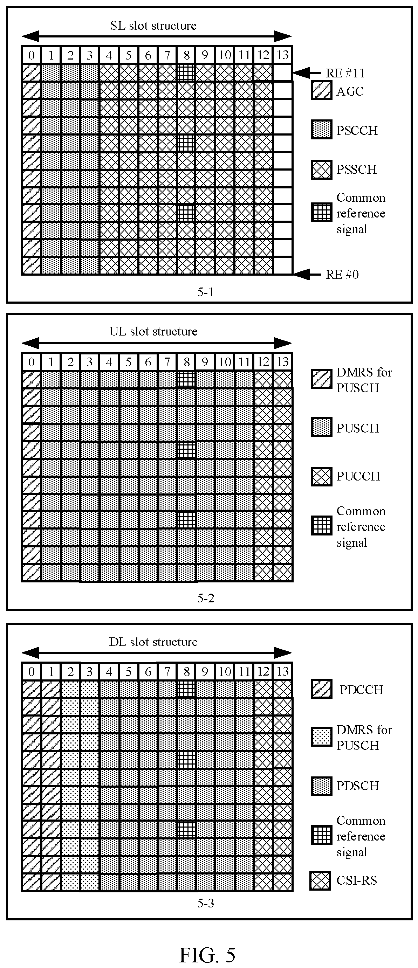

In this application, time domain resources and frequency domain resources, in downlink (downlink, DL), SL, and UL slot structures, of the common reference signal in the configuration information respectively completely overlap. For example, FIG. 5 is a diagram of time domain resources and frequency domain resources of a common reference signal in DL, SL, and UL slot structures respectively according to an embodiment of this application. In 5-1 of FIG. 5 to 5-3 of FIG. 5, one slot includes 14 symbols: a symbol 0 to a symbol 13, and one RB includes 12 REs: an RE #0 to an RE #11. 5-1 of FIG. 5 is a diagram of a possible SL slot structure, 5-2 of FIG. 5 is a diagram of a possible UL slot structure, and 5-3 of FIG. 5 is a diagram of a possible DL slot structure. In 5-1 of FIG. 5, automatic gain control (automatic gain control, AGC) occupies an RE #0 to an RE #11 on a symbol 0; a PSCCH occupies REs #0 to REs #11 on a symbol 1 to a symbol 3; a PSSCH occupies REs #0 to REs #11 on a symbol 4 to a symbol 7, an RE #0 to an RE #2, an RE #4 to an RE #6, and an RE #8 to an RE #10 on a symbol 8, and REs #0 to REs #11 on a symbol 9 to a symbol 12; and a common reference signal occupies an RE #3, an RE #7, and an RE #11 on the symbol 8. In 5-2 of FIG. 5, a DMRS for PUSCH occupies an RE #0 to an RE #11 on a symbol 0; a DMRS for PUSCH occupies REs #0 to REs #11 on a symbol 1 to a symbol 7, an RE #0 to an RE #2, an RE #4 to an RE #6, and an RE #8 to an RE #10 on a symbol 8, and REs #0 to REs #11 on a symbol 9 to a symbol 11; a PUCCH occupies REs #0 to REs #11 on a symbol 12 and a symbol 13; and a common reference signal occupies an RE #3, an RE #7, and an RE #11 on the symbol 8. In 5-3 of FIG. 5, a PDCCH occupies REs #0 to REs #11 on a symbol 0 and a symbol 1; a DMRS for PUSCH occupies REs #0 to REs #11 on a symbol 2 and a symbol 3; a PDSCH occupies REs #0 to REs #11 on a symbol 4 to a symbol 7, an RE #0 to an RE #2, an RE #4 to an RE #6, and an RE #8 to an RE #10 on a symbol 8, and REs #0 to REs #11 on a symbol 9 to a symbol 11; a CSI-RS occupies REs #0 to REs #11 on a symbol 12 and a symbol 13; and a common reference signal occupies an RE #3, an RE #7, and an RE #11 on the symbol 8. As can be learned, in 5-1 of FIG. 5 to 5-3 of FIG. 5, each common reference signal occupies the RE #3, the RE #7, and the RE #11 on the symbol 8.

Optionally, the first resource does not overlap a third resource, and the third resource includes at least one of the following: any resource in a CORESET, or a resource used by the network device to send a reference signal. In this application, any resource in the CORESET includes a resource in a CORESET configured for any terminal device within a service range of the network device. The reference signal sent by the network device is a reference signal sent by using a downlink channel, for example, may include at least one of the following: a DMRS, an SSB, or a CSI-RS. The DMRS sent by the network device may include, for example, at least one of the following: a DMRS for PDSCH, a DMRS for PDSCH, or a DMRS for PBCH. The CSI-RS sent by the network device may include, for example, an NZP CSI-RS or a CSI-IM. When the first resource does not overlap any resource in the CORESET, or the first resource does not overlap a resource used by the network device to send the DMRS and/or the SSB, it is ensured that communication between devices is not affected. When the first resource does not overlap a resource used by the network device to send the CSI-IM, it can be ensured that measurement results of a plurality of sent reference signals do not affect each other.

Optionally, in this application, that the first resource does not overlap the third resource may be understood as that a time domain resource of the first resource does not overlap a time domain resource of the third resource, and/or a frequency domain resource of the first resource does not overlap a frequency domain resource of the third resource.

Optionally, the method further includes step 302.

302. The first terminal device receives a common reference signal from the network device on the first resource. Correspondingly, the network device sends the common reference signal on the first resource.

In a possible implementation, the common reference signal may be, for example, a sequence, such as a pseudo-random sequence, or may be a combination of sequences or a variant of a sequence. In another possible implementation, the common reference signal may be, for example, a reference signal encoded by the network device based on a sequence, and the reference signal encoded by the network device based on the sequence may include, for example, an identifier of the network device.

Optionally, that the network device sends the common reference signal on the first resource includes: When a first condition is met, the network device sends the common reference signal on the first resource. The first condition includes at least one of the following: the network device has to-be-sent data, or the network device receives second indication information sent by the first terminal device or a third terminal device. The second indication information indicates the network device to send the common reference signal, and the third terminal device is a terminal device that performs uplink transmission with the network device. In a possible implementation, in this application, the to-be-sent data of the network device may be understood as one or more of a PDSCH, a PDCCH, or the like. As can be learned, when having to-be-sent data, the network device may send the common reference signal to the first terminal device on the first resource, which indicates that the network device may actively send the common reference signal when intending to send data. Alternatively, when receiving the second indication information of the first terminal device or the third terminal device, the network device may send the common reference signal, which indicates that the first terminal device or the third terminal device may trigger the network device to send the common reference signal, thereby improving flexibility of sending the common reference signal.

Optionally, the method further includes step 303.

303. The first terminal device measures the common reference signal to obtain a signal measurement result.

In this application, the signal measurement result may be understood as, for example, at least one of the following: reference signal received power (reference signal received power, RSRP), reference signal received quality (reference signal received quality, RSRQ), a received signal strength indicator (received signal strength indicator, RSSI), or a signal-to-interference-plus-noise ratio (signal-to-interference-plus-noise ratio, SINR).

The first terminal device may measure the common reference signal in, for example, any one of the following manners. A specific manner may depend on a specific implementation, a pre-agreement, a definition in a standard, or the like.

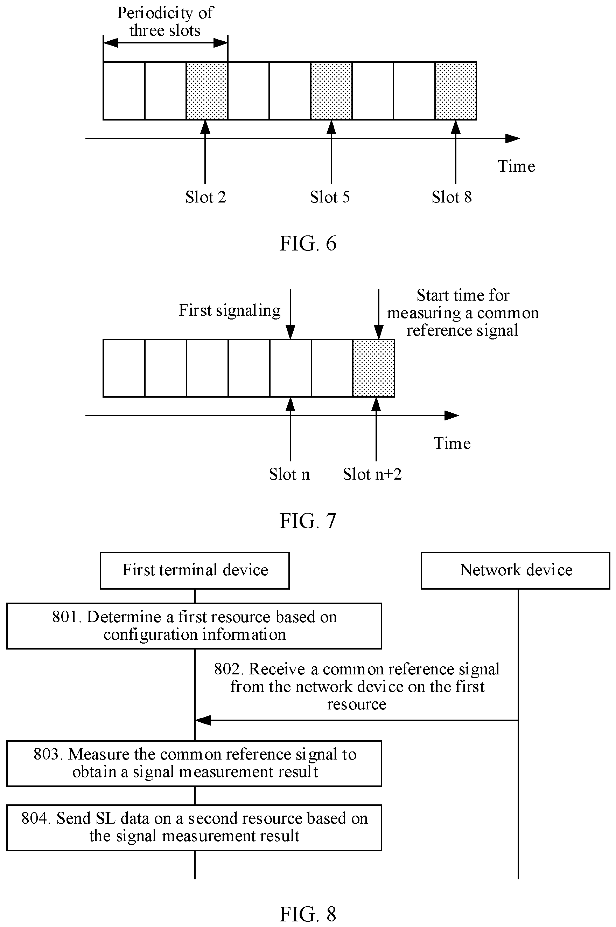

Manner 2.1: The first terminal device periodically measures the common reference signal based on a periodicity and an offset of the periodicity. The periodicity and the offset of the periodicity are predefined or preconfigured. For example, the periodicity and the offset of the periodicity are predefined or preconfigured in the first terminal device. Alternatively, the periodicity and the offset of the periodicity are indicated by the network device to the first terminal device, or the periodicity and the offset of the periodicity are indicated by the second terminal device to the first terminal device. For example, the periodicity and the offset of the periodicity are indicated by the network device to the first terminal device by using RRC signaling, MAC CE signaling, or DCI signaling. For another example, the periodicity and the offset of the periodicity are indicated by the second terminal device to the first terminal device by using RRC signaling, MAC CE signaling, or SCI signaling. In this application, the SCI signaling may be first-stage SCI (first-stage SCI) or second-stage SCI (second-stage SCI). The RRC signaling, the MAC CE signaling, the DCI signaling, or the SCI signaling may indicate the first terminal device to periodically measure the common reference signal based on the periodicity and the offset of the periodicity. Alternatively, it may be understood as that the RRC signaling, the MAC CE signaling, the DCI signaling, or the SCI signaling is used to activate the first terminal device to periodically measure the common reference signal based on the periodicity and the offset of the periodicity. Optionally, in this application, the offset of the periodicity may be understood as, for example, an offset of a symbol in a periodicity, or the offset of the periodicity represents an offset of the first measurement slot in 10240 ms relative to a system frame number (system frame number, SFN), or the offset of the periodicity represents an offset of the first measurement slot in 10240 ms relative to a direct frame number (direct frame number, DFN). It should be understood that, after the first terminal device periodically measures the common reference signal based on the periodicity and the offset of the periodicity, at least one signal measurement result may be obtained, and the first terminal device may send, to the network device, a signal measurement result that is in the at least one signal measurement result and that is greater than or equal to a first threshold, and/or the first terminal device may send, to the network device, a signal measurement result that is in the at least one signal measurement result and that is less than or equal to a second threshold. For example, FIG. 6 is a diagram of periodically measuring a common reference signal according to an embodiment of this application. In FIG. 6, a periodicity is three slots. Therefore, the first terminal device measures the common reference signal once every three slots. In addition, an offset of the periodicity is two slots. The two slots may be, for example, an offset of the first measurement slot (that is, a slot 2) in 10240 ms relative to an SFN or a DFN. Therefore, the first terminal device may respectively measure the common reference signal in the slot 2 in the first periodicity, a slot 5 in the second periodicity, and a slot 8 in the third periodicity, to obtain three signal measurement results. In this way, the first terminal device does not need to repeatedly receive an instruction for measuring the common reference signal, thereby reducing signaling overheads and power consumption of measurement.

Manner 2.2: The first terminal device receives first signaling from the network device or the second terminal device. Correspondingly, the network device or the second terminal device may send the first signaling to the first terminal device. The first signaling indicates the first terminal device to measure the common reference signal. In a possible implementation, the first signaling further includes a start time and/or a duration for measuring the common reference signal by the first terminal device. In another possible implementation, the first signaling does not include a start time and/or a duration for measuring the common reference signal by the first terminal device. In this case, the first terminal device may measure the common reference signal in, for example, one or more slots after receiving the first signaling. The first signaling sent by the network device to the first terminal device may be, for example, RRC signaling, MAC CE signaling, or DCI signaling. The first signaling sent by the second terminal device to the first terminal device may be, for example, RRC signaling, MAC CE signaling, or SCI signaling. For example, FIG. 7 is a diagram of dynamically triggering measurement on a common reference signal according to an embodiment of this application. In FIG. 7, a slot in which the first terminal device receives the first signaling is a slot n, and a start time for measuring the common reference signal by the first terminal device is a slot n+2. This indicates that the network device or the second terminal device may dynamically indicate the first terminal device to measure the common reference signal, thereby improving flexibility of measuring the common reference signal.

Manner 2.3: A higher layer of the first terminal device sends second signaling to a physical layer of the first terminal device. The higher layer of the first terminal device includes an RRC layer or a MAC layer, and the second signaling indicates the physical layer of the first terminal device to measure the common reference signal. In a possible implementation, the second signaling further includes a start time and/or a duration for measuring the common reference signal by the physical layer of the first terminal device. In another possible implementation, the first signaling does not include a start time and/or a duration for measuring the common reference signal by the physical layer of the first terminal device. In this case, the physical layer of the first terminal device may measure the common reference signal in, for example, one or more slots after receiving the first signaling. Optionally, that the higher layer of the first terminal device sends the second signaling to the physical layer of the first terminal device may be understood as that when the higher layer of the first terminal device has to-be-sent data, the higher layer of the first terminal device sends the second signaling to the physical layer of the first terminal device. The to-be-sent data of the first terminal device is one or more of a PSSCH, a PSCCH, or the like. In addition, that the second signaling indicates the physical layer of the first terminal device to measure the common reference signal may be understood as that the second signaling is used to activate the physical layer of the first terminal device to measure the common reference signal. When the higher layer of the first terminal device is an RRC layer, the second signaling may be, for example, RRC signaling. When the higher layer of the first device is a MAC layer, the second signaling may be, for example, MAC CE signaling. This indicates that measurement on the common reference signal may be triggered by the higher layer of the first terminal device, and this can meet a requirement of the first terminal device.

Optionally, the method further includes step 304.

304. The network device receives the signal measurement result from the first terminal device. Correspondingly, the first terminal device sends the signal measurement result to the network device.

305. The network device determines a second resource based on the signal measurement result.

Optionally, step 305 may include, for example: If the signal measurement result is greater than or equal to the first threshold, the network device removes, from schedulable resources based on the signal measurement result, a resource on which interference occurs, to obtain the second resource. If the signal measurement result is less than or equal to the second threshold, the network device uses a schedulable resource as the second resource. The schedulable resource may be understood as, for example, a schedulable time domain resource and a schedulable frequency domain resource, that is, an idle time domain resource and an idle frequency domain resource. A time domain resource of the interference resource is located after the time domain resource of the first resource, and a frequency domain resource of the interference resource partially or completely overlaps the frequency domain resource of the first resource.

306. The first terminal device receives first indication information from the network device. The first indication information indicates the first terminal device to send SL data on the second resource, and the time domain resource of the first resource is located before a time domain resource of the second resource. Correspondingly, the network device sends the first indication information to the first terminal device.

FIG. 8 is a schematic flowchart of another communication method according to an embodiment of this application. According to the method, a first terminal device that performs SL transmission may sense interference from a Uu communication system by identifying a common reference signal sent by a network device, and may further determine an available second resource based on a magnitude of the interference, so that the first terminal device sends SL data on the second resource without interference, that is, interference between the Uu communication system and an SL communication system is avoided. As shown in FIG. 8, the method includes but is not limited to the following steps.

801. A first terminal device determines a first resource based on configuration information.

For details, refer to detailed descriptions in step 301.

Optionally, step 801 may be understood as, for example: The first terminal device determines the first resource based on the configuration information and a second resource. Specifically, the first terminal device may further determine a candidate resource set by sensing a resource reserved by another terminal device. For example, the first terminal device determines the candidate resource set by obtaining first-stage SCI. In a possible implementation, the second resource may be one or more candidate resources that are in the candidate resource set and that overlap a frequency domain resource of the second resource. To ensure that the second resource is not used by another terminal device, before several slots of the second resource, the first terminal device may determine resource positions of the common reference signal in one slot and one RB based on the configuration information, and then determine the first resource based on a frequency domain position of the second resource.

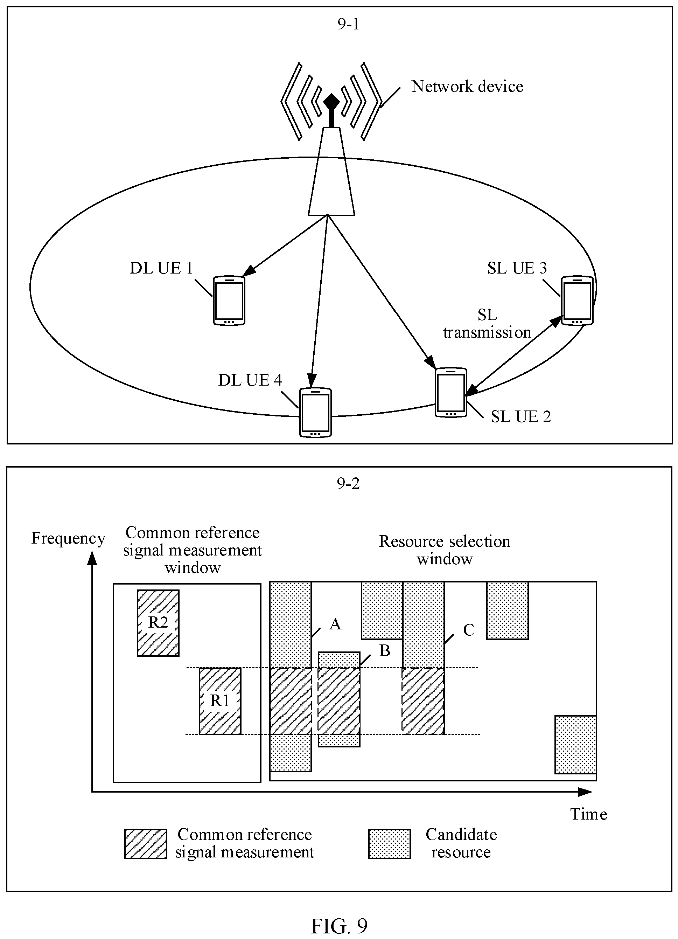

For example, FIG. 9 is a diagram of resource selection according to an embodiment of this application. In 9-1 of FIG. 9, a DL UE 1 is located in a cell of a network device, an SL UE 2 and an SL UE 3 are located at an edge of the cell of the network device, and a DL UE 4 is located at the edge of the cell of the network device. Therefore, a distance between the network device and the SL UE 3 is greater than or equal to a first distance. The network device sends data to the DL UE 1 and the DL UE 4 on a resource R1 and a resource R2 respectively, and the network device sends a common reference signal on each of the resource R1 and the resource R2. A time-frequency resource used to send PDSCH data in the resource R1 does not overlap a time-frequency resource used to send the common reference signal in the resource R1, and a time-frequency resource used to send PDSCH data in the resource R2 does not overlap a time-frequency resource used to send the common reference signal in the resource R2, that is, the resource R1 and the resource R2 are first resources. Therefore, in 9-2 of FIG. 9, in a common reference signal measurement window, the SL UE 2 may measure the common reference signal on the resource R1, where an obtained RSRI #1 is 1 dBm, and the SL UE 2 may measure the common reference signal on the resource R2, where an obtained RSRI #2 is 3 dBm. If a first threshold is 3 dBm, and a second threshold is 1 dBm, as the RSRI #1 is equal to the second threshold in this case, a subsequent time-frequency resource that is close to a time domain position of the resource R1 and that overlaps the resource R1 in frequency domain may be used to send SL data. That is, the "subsequent time-frequency resource that is close to the time domain position of the resource R1 and that overlaps the resource R1 in frequency domain" herein is a second resource. In addition, the SL UE 2 may further determine a candidate resource set, for example, candidate resources in a resource selection window in 9-2 of FIG. 9, by sensing a resource reserved by another terminal device used in an SL communication system. The SL UE 2 may determine, from the candidate resources in the resource selection window, a candidate resource (for example, a candidate resource A, a candidate resource B, and a candidate resource C in 9-2 in FIG. 9) that overlaps a frequency domain resource of R1, to send SL data to another SL UE, for example, send SL data to the terminal device SL UE 3.

In a possible implementation, a frequency domain resource of the second resource includes the frequency domain resource of the first resource. In another possible implementation, the frequency domain resource of the second resource does not overlap the frequency domain resource of the first resource.

Optionally, the method may further include step 802.

802. The first terminal device receives a common reference signal from the network device on the first resource. Correspondingly, when a first condition is met, the network device sends the common reference signal on the first resource. The first condition includes at least one of the following: the network device has to-be-sent data, or the network device receives second indication information sent by the first terminal device or a third terminal device. The second indication information indicates the network device to send the common reference signal, and the third terminal device is a terminal device that performs uplink transmission with the network device. In a possible implementation, the common reference signal may be, for example, a sequence, such as a pseudo-random sequence, or may be a combination, a variant, or the like of a sequence. In another possible implementation, the common reference signal may be, for example, a reference signal encoded by the network device based on a sequence, and the reference signal encoded by the network device based on the sequence may include, for example, an identifier of the network device. For other descriptions of the common reference signal, refer to specific descriptions of step 301 in FIG. 3. Details are not described herein again.

803. The first terminal device measures the common reference signal to obtain a signal measurement result.

For details, refer to detailed descriptions in step 304. A difference lies in that after the first terminal device may periodically measure the common reference signal based on a periodicity and an offset of the periodicity, at least one signal measurement result may be obtained, and the first terminal device may send SL data on the second resource based on a signal measurement result that is in the at least one signal measurement result and that is greater than or equal to the first threshold, and/or the first terminal device may send SL data on the second resource based on a signal measurement result that is in the at least one signal measurement result and that is less than or equal to the second threshold.

804. The first terminal device sends SL data on the second resource based on the signal measurement result. A time domain resource of the first resource is located before a time domain resource of the second resource.

In a possible implementation, step 804 in which the first terminal device sends the SL data on the second resource based on the signal measurement result includes, for example: When the signal measurement result is less than or equal to the first threshold, the first terminal device sends the SL data by using the second resource. The frequency domain resource of the second resource includes the frequency domain resource of the first resource. As can be learned, when the signal measurement result is less than or equal to the first threshold, it means that a distance between the first terminal device and the network device is greater than or equal to a first distance, and even if both the first terminal device and the network device use the second resource to send data, mutual interference does not occur.

The first distance may be predefined or (pre) configured in the first terminal device. For example, the first distance is indicated by the network device to the first terminal device, or the first distance is indicated by a second terminal device to the first terminal device. That the first distance is indicated by the network device to the first terminal device may be understood as, for example: The first distance is indicated by the network device to the first terminal device by using RRC signaling, MAC CE signaling, or DCI signaling. The signaling is sent by using a downlink transport channel. That the first distance is indicated by the second terminal device to the first terminal device may be understood as, for example: The first distance is indicated by the second terminal device to the first terminal device by using RRC signaling, MAC CE signaling, or SCI signaling. The signaling is sent by using a sidelink transport channel.

In another possible implementation, step 804 in which the first terminal device sends the SL data on the second resource based on the signal measurement result includes, for example: When the signal measurement result is greater than or equal to the second threshold, the first terminal device sends the SL data by using the second resource. The frequency domain resource of the second resource does not overlap the frequency domain resource of the first resource. As can be learned, when the signal measurement result is greater than or equal to the second threshold, it means that a distance between the first terminal device and the network device is less than or equal to a second distance. In this case, if the first terminal device and the network device send data by using an overlapping frequency domain resource at the same time, mutual interference easily occurs. Therefore, to avoid mutual interference between transmission of the two, the first terminal device may actively avoid the frequency domain resource included in the first resource, and send data by using the second resource that does not overlap the frequency domain resource of the first resource.

The second distance may be predefined or (pre) configured in the first terminal device. For example, the second distance is indicated by the network device to the first terminal device, or the second distance is indicated by the second terminal device to the first terminal device. That the second distance is indicated by the network device to the first terminal device may be understood as, for example: The second distance is indicated by the network device to the first terminal device by using RRC signaling, MAC CE signaling, or DCI signaling. The signaling is sent by using a downlink transport channel. That the second distance is indicated by the second terminal device to the first terminal device may be understood as, for example: The second distance is indicated by the second terminal device to the first terminal device by using RRC signaling, MAC CE signaling, or SCI signaling. The signaling is sent by using a sidelink transport channel. Optionally, the first distance and the second distance may be the same or different.

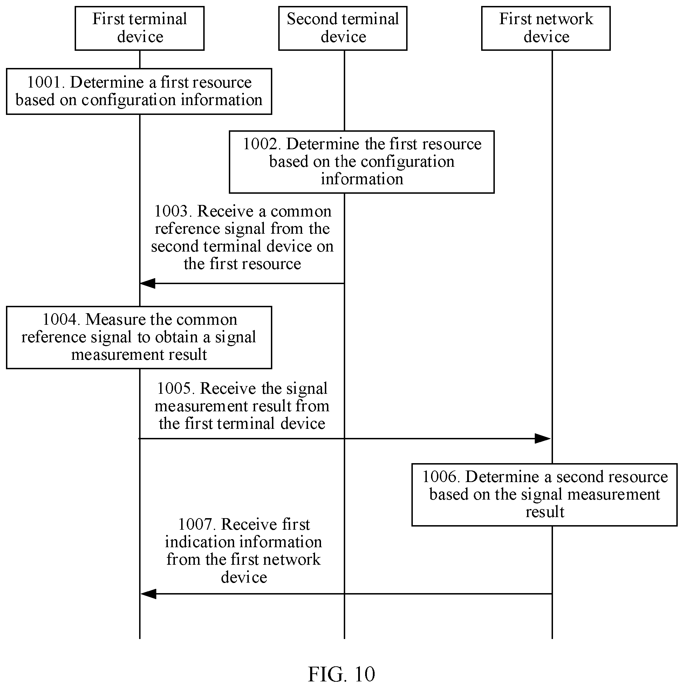

FIG. 10 is a schematic flowchart of another communication method according to an embodiment of this application. According to the method, a first terminal device that performs SL transmission may sense interference from a Uu communication system by identifying a common reference signal sent by a second terminal device, and may further notify a first network device of a magnitude of the interference. Further, the first network device may further determine a second resource based on a signal measurement result, and send, to the first terminal device, first indication information for sending SL data on the second resource, which indicates that the first network device may determine an available second resource based on the magnitude of the interference from the Uu communication system, so that the first terminal device sends the SL data on the second resource without interference, that is, interference between the Uu communication system and an SL communication system is avoided. As shown in FIG. 10, the method includes but is not limited to the following steps.

1001. A first terminal device determines a first resource based on configuration information.

In the embodiment in FIG. 10, the first terminal device is a terminal device that performs SL transmission, and may also be referred to as an SL UE. A name of the first terminal device is not limited in this application.

Optionally, the configuration information may be predefined or (pre)configured in the first terminal device. For example, the configuration information is indicated by the first network device to the first terminal device, or the configuration information is indicated by a third terminal device to the first terminal device. That the configuration information is indicated by the first network device to the first terminal device may be understood as, for example: The configuration information is indicated by the first network device to the first terminal device by using RRC signaling. That the configuration information is indicated by the third terminal device to the first terminal device may be understood as, for example: The configuration information is indicated by the third terminal device to the first terminal device by using MAC CE signaling or SCI signaling. The first terminal device may perform, for example, SL transmission with the third terminal device. For example, the first terminal device sends SL data to the third terminal device on a second resource.

Optionally, the method further includes: The first terminal device determines, based on third signaling, that the configuration information takes effect. For that the first terminal device determines, based on the third signaling, that the configuration information takes effect, refer to detailed descriptions in step 301.

Optionally, the method further includes step 1002.

1002. A second terminal device determines the first resource based on the configuration information.

In the embodiment shown in FIG. 10, the second terminal device is a terminal device that performs uplink transmission with a second network device, and may also be referred to as a UL UE. A name of the second terminal device is not limited in this application. Optionally, the first network device and the second network device may be a same network device or different network devices.

Optionally, the configuration information may be predefined or (pre-configured) configured in the second terminal device. For example, the configuration information is indicated by the second network device to the second terminal device. That the configuration information is indicated by the second network device to the second terminal device may be understood as, for example: The configuration information is indicated by the second network device to the second terminal device by using RRC signaling.

Optionally, the method further includes: The second terminal device determines, based on fourth signaling, that the configuration information takes effect, for example, determining, based on a second field in the fourth signaling, that the configuration information takes effect. Specifically, when the second field indicates enable, active, available, or true, or a bit value corresponding to the second field is "1", the configuration information takes effect, indicating that a resource configured by using the configuration information may be used to carry the common reference signal. When the second field indicates disable, deactive, unavailable, or false, or the bit value corresponding to the second field is "0", the configuration information does not take effect, indicating that the resource configured by using the configuration information may be used to carry data. For another example, when the fourth signaling includes a second field, the configuration information takes effect, indicating that the resource configured by using the configuration information may be used to carry the common reference signal. When the fourth signaling does not include a second field, the configuration information does not take effect, indicating that the resource configured by using the configuration information may be used to carry data. The fourth signaling may be, for example, RRC signaling, MAC CE signaling, DCI signaling, or SCI signaling. In a possible implementation, before step 1002, the second terminal device may determine, based on the fourth signaling, that the configuration information takes effect.

Optionally, the first resource may further not overlap a third resource, and the third resource includes a resource used by the second terminal device to send a reference signal. The reference signal sent by the second terminal device may include, for example, at least one of the following: a DMRS, a PTRS, or an SRS. The DMRS sent by the second terminal device may include, for example, at least one of the following: a DMRS for PUSCH or a DMRS for PUCCH. The PTRS sent by the second terminal device may include, for example, a PTRS carried on a PUSCH. When the first resource does not overlap a resource used by the second terminal device to send the DMRS, it is ensured that communication between devices is not affected. When the first resource does not overlap a resource used by the second terminal device to send the PTRS, phase estimation is not affected. When the first resource does not overlap a resource used by the second terminal device to send the SRS, positioning or channel measurement implemented by using the SRS is not affected.

It should be noted that there is no necessary execution sequence between step 1001 and step 1002. For example, step 1001 may be performed before step 1002, or may be performed after step 1002, or may be performed simultaneously with step 1002. This is not limited herein.

Optionally, the method further includes step 1003.

1003. The first terminal device receives a common reference signal from the second terminal device on the first resource. Correspondingly, when a first condition is met, the second terminal device sends the common reference signal on the first resource. The first condition includes at least one of the following: the second terminal device has to-be-sent data, or the second terminal device receives second indication information sent by the second network device. The second indication information indicates the second terminal device to send the common reference signal. The to-be-sent data of the second terminal device may include, for example, one or more of a PUSCH, a PUCCH, or the like.

In a possible implementation, the common reference signal may be, for example, a sequence, such as a pseudo-random sequence, or may be a combination, a variant, or the like of a sequence. In another possible implementation, the common reference signal may be, for example, a reference signal encoded by the second terminal device based on a sequence, and the reference signal encoded by the second terminal device based on the sequence may include, for example, an identifier of the second terminal device. For other descriptions of the common reference signal, refer to specific descriptions of step 301 in FIG. 3. Details are not described herein again.

1004. The first terminal device measures the common reference signal to obtain a signal measurement result.

The first terminal device may measure the common reference signal in, for example, any one of the following manners. A specific manner may depend on a specific implementation, a pre-agreement, a definition in a standard, or the like.

Manner 3.1: The first terminal device periodically measures the common reference signal based on a periodicity and an offset of the periodicity. The periodicity and the offset of the periodicity are predefined or preconfigured in the first terminal device, or the periodicity and the offset of the periodicity are indicated by the first network device to the first terminal device, or the periodicity and the offset of the periodicity are indicated by the third terminal device to the first terminal device. For example, the periodicity and the offset of the periodicity are indicated by the first network device to the first terminal device by using RRC signaling, MAC CE signaling, or DCI signaling. For another example, the periodicity and the offset of the periodicity are indicated by the third terminal device to the first terminal device by using RRC signaling, MAC CE signaling, or SCI signaling. The RRC signaling, the MAC CE signaling, the DCI signaling, or the SCI signaling may indicate the first terminal device to periodically measure the common reference signal based on the periodicity and the offset of the periodicity. Alternatively, it may be understood as that the RRC signaling, the MAC CE signaling, the DCI signaling, or the SCI signaling is used to activate the first terminal device to periodically measure the common reference signal based on the periodicity and the offset of the periodicity. It should be understood that, after the first terminal device periodically measures the common reference signal based on the periodicity and the offset of the periodicity, at least one signal measurement result may be obtained, and the first terminal device may send, to the first network device, a signal measurement result that is in the at least one signal measurement result and that is greater than or equal to a first threshold, and/or the first terminal device may send, to the first network device, a signal measurement result that is in the at least one signal measurement result and that is less than or equal to a second threshold. In this way, the first terminal device does not need to repeatedly receive an instruction for measuring the common reference signal, thereby reducing signaling overheads.

Manner 3.2: The first terminal device receives first signaling from the first network device or the third terminal device. Correspondingly, the first network device or the third terminal device may send the first signaling to the first terminal device. For details about the first signaling, refer to specific descriptions of Manner 2.2 in step 304. Details are not described herein again.

Manner 3.3: A higher layer of the first terminal device sends second signaling to a physical layer of the first terminal device. The higher layer of the first terminal device includes an RRC layer or a MAC layer, and the second signaling indicates the physical layer of the first terminal device to measure the common reference signal. For details about the second signaling, refer to specific descriptions of Manner 2.3 in step 304. Details are not described herein again.

Optionally, the method further includes step 1005.

1005. The first network device receives the signal measurement result from the first terminal device. Correspondingly, the first terminal device sends the signal measurement result to the first network device.

1006. The first network device determines a second resource based on the signal measurement result.

For details, refer to specific descriptions of step 305 in FIG. 3. Details are not described herein again.

1007. The first terminal device receives first indication information from the first network device. The first indication information indicates the first terminal device to send SL data on the second resource, and a time domain resource of the first resource is located before a time domain resource of the second resource. Correspondingly, the first network device sends the first indication information to the first terminal device.

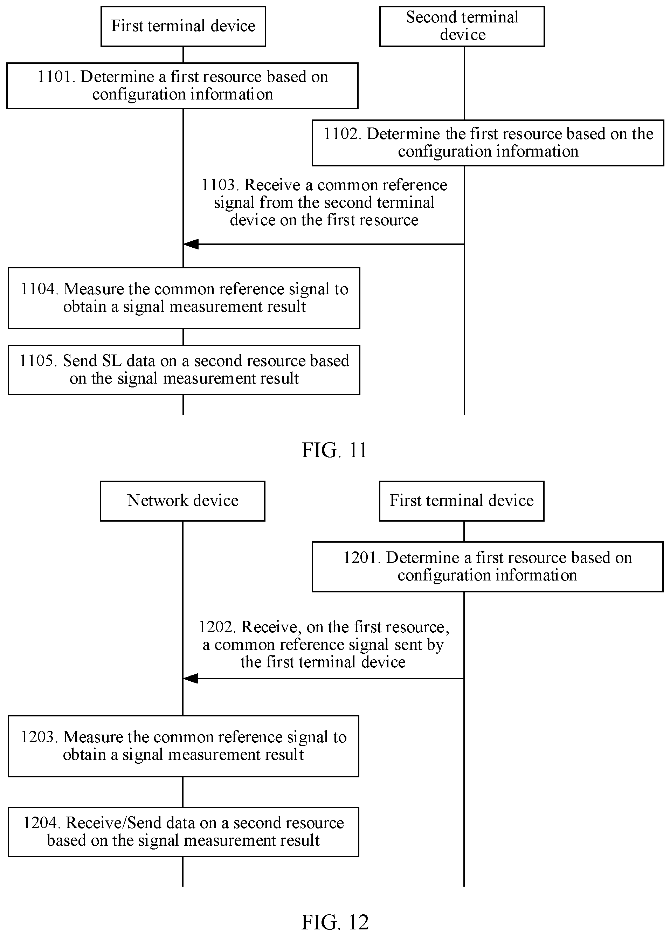

FIG. 11 is a schematic flowchart of another communication method according to an embodiment of this application. According to the method, a first terminal device that performs SL transmission may sense interference from a Uu communication system by identifying a common reference signal sent by a second terminal device, and may further determine an available second resource based on a magnitude of the interference, so that the first terminal device sends SL data on the second resource without interference, that is, interference between the Uu communication system and an SL communication system is avoided. As shown in FIG. 11, the method includes but is not limited to the following steps.

1101. A first terminal device determines a first resource based on configuration information.

In the embodiment in FIG. 11, the first terminal device is a terminal device that performs SL transmission, and may also be referred to as an SL UE. A name of the first terminal device is not limited in this application.

Optionally, the configuration information may be predefined or (pre)configured in the first terminal device. For example, the configuration information is indicated by a second network device to the first terminal device, or the configuration information is indicated by a third terminal device to the first terminal device. That the configuration information is indicated by the second network device to the first terminal device may be understood as, for example: The configuration information is indicated by the second network device to the first terminal device by using RRC signaling. That the configuration information is indicated by the third terminal device to the first terminal device may be understood as, for example: The configuration information is indicated by the third terminal device to the first terminal device by using RRC signaling, MAC CE signaling, or SCI signaling. The first terminal device may perform, for example, SL transmission with the third terminal device. For example, the first terminal device sends SL data to the third terminal device on a second resource.

Optionally, the method further includes: The first terminal device determines, based on third signaling, that the configuration information takes effect. For that the first terminal device determines, based on the third signaling, that the configuration information takes effect, refer to detailed descriptions in step 301.

Optionally, step 1101 may be understood as, for example: The first terminal device determines the first resource based on the configuration information and the second resource. For details, refer to step 801.

In a possible implementation, a frequency domain resource of the second resource includes a frequency domain resource of the first resource. In another possible implementation, the frequency domain resource of the second resource does not overlap the frequency domain resource of the first resource.

Optionally, the method further includes step 1102.

1102. A second terminal device determines the first resource based on the configuration information.

In the embodiment shown in FIG. 11, the second terminal device is a terminal device that performs uplink transmission with a first network device, and may also be referred to as a UL UE. A name of the second terminal device is not limited in this application. Optionally, the first network device and the first network device may be a same network device or different network devices.

Optionally, the configuration information may be predefined or (pre-configured) configured in the second terminal device. For example, the configuration information is indicated by the first network device to the second terminal device. That the configuration information is indicated by the first network device to the second terminal device may be understood as, for example: The configuration information is indicated by the first network device to the second terminal device by using RRC signaling.

Optionally, the method further includes: The second terminal device determines, based on fourth signaling, that the configuration information takes effect. For that the second terminal device determines, based on the fourth signaling, that the configuration information takes effect, refer to specific descriptions in step 1002.

Optionally, the first resource may further not overlap a third resource. For the third resource, refer to specific descriptions in step 1002.

It should be noted that there is no necessary execution sequence between step 1101 and step 1102. For example, step 1101 may be performed before step 1102, or may be performed after step 1102, or may be performed simultaneously with step 1102. This is not limited herein.

Optionally, the method further includes step 1103.

1103. The first terminal device receives a common reference signal from the second terminal device on the first resource. Correspondingly, when a first condition is met, the second terminal device sends the common reference signal on the first resource. The first condition includes at least one of the following: the second terminal device has to-be-sent data, or the second terminal device receives second indication information sent by the first network device. The second indication information indicates the second terminal device to send the common reference signal. The to-be-sent data of the second terminal device may include, for example, one or more of a PUSCH, a PUCCH, or the like.

For details, refer to detailed descriptions in step 1003. For other descriptions of the common reference signal, refer to specific descriptions of step 301 in FIG. 3. Details are not described herein again.

1104. The first terminal device measures the common reference signal to obtain a signal measurement result.

The first terminal device may measure the common reference signal in, for example, any one of the following manners. A specific manner may depend on a specific implementation, a pre-agreement, a definition in a standard, or the like.

Manner 4.1: The first terminal device periodically measures the common reference signal based on a periodicity and an offset of the periodicity. The periodicity and the offset of the periodicity are predefined or pre-configured in the first terminal device, or the periodicity and the offset of the periodicity are indicated by the second network device to the first terminal device, or the periodicity and the offset of the periodicity are indicated by the third terminal device to the first terminal device. For example, the periodicity and the offset of the periodicity are indicated by the second network device to the first terminal device by using RRC signaling, MAC CE signaling, or DCI signaling. For another example, the periodicity and the offset of the periodicity are indicated by the third terminal device to the first terminal device by using RRC signaling, MAC CE signaling, or SCI signaling. The RRC signaling, the MAC CE signaling, the DCI signaling, or the SCI signaling may indicate the first terminal device to periodically measure the common reference signal based on the periodicity and the offset of the periodicity. Alternatively, it may be understood as that the RRC signaling, the MAC CE signaling, the DCI signaling, or the SCI signaling is used to activate the first terminal device to periodically measure the common reference signal based on the periodicity and the offset of the periodicity. It should be understood that, after the first terminal device periodically measures the common reference signal based on the periodicity and the offset of the periodicity, at least one signal measurement result may be obtained, and the first terminal device may send, to the second network device, a signal measurement result that is in the at least one signal measurement result and that is greater than or equal to a first threshold, or the first terminal device may send, to the second network device, a signal measurement result that is in the at least one signal measurement result and that is less than or equal to a second threshold. In this way, the first terminal device does not need to repeatedly receive an instruction for measuring the common reference signal, thereby reducing signaling overheads and power consumption of measurement.

Manner 4.2: The first terminal device receives first signaling sent by the second network device or the third terminal device. Correspondingly, the second network device or the third terminal device may send the first signaling to the first terminal device. The first signaling indicates the first terminal device to measure the common reference signal. For details about the first signaling, refer to specific descriptions of Manner 2.2 in step 304. Details are not described herein again.

Manner 4.3: A higher layer of the first terminal device sends second signaling to a physical layer of the first terminal device. The higher layer of the first terminal device includes an RRC layer or a MAC layer, and the second signaling indicates the physical layer of the first terminal device to measure the common reference signal. For details about the second signaling, refer to specific descriptions of Manner 2.3 in step 304. Details are not described herein again.

Optionally, the method further includes step 1105.

1105. The first terminal device sends SL data on the second resource based on the signal measurement result. A time domain resource of the first resource is located before a time domain resource of the second resource.

In a possible implementation, step 1105 may be understood as, for example: When the signal measurement result is less than or equal to the first threshold, the first terminal device sends the SL data by using the second resource. The frequency domain resource of the second resource includes the frequency domain resource of the first resource. As can be learned, when the signal measurement result is less than or equal to the first threshold, it means that a distance between the first terminal device and the second network device is greater than or equal to a first distance, and even if both the first terminal device and the second network device use the second resource to send data, mutual interference does not occur.

The first distance may be predefined or (pre) configured in the first terminal device. For example, the first distance is indicated by the second network device to the first terminal device, or the first distance is indicated by the third terminal device to the first terminal device. That the first distance is indicated by the second network device to the first terminal device may be understood as, for example: The first distance is indicated by the second network device to the first terminal device by using RRC signaling, MAC CE signaling, or DCI signaling. The signaling is sent by using a downlink transport channel. That the first distance is indicated by the third terminal device to the first terminal device may be understood as, for example: The first distance is indicated by the third terminal device to the first terminal device by using RRC signaling, MAC CE signaling, or SCI signaling. The signaling is sent by using a sidelink transport channel.

In another possible implementation, step 1105 may be understood as, for example: When the signal measurement result is greater than or equal to the second threshold, the first terminal device sends the SL data by using the second resource. The frequency domain resource of the second resource does not overlap the frequency domain resource of the first resource. As can be learned, when the signal measurement result is greater than or equal to the second threshold, it means that a distance between the first terminal device and the second network device is less than or equal to a second distance. In this case, if the first terminal device and the second network device send data by using an overlapping frequency domain resource at the same time, mutual interference easily occurs. Therefore, to avoid mutual interference between transmission of the two, the first terminal device may actively avoid the frequency domain resource included in the first resource, and send data by using the second resource that does not overlap the frequency domain resource of the first resource.

The second distance may be predefined or (pre) configured in the first terminal device. For example, the second distance is indicated by the second network device to the first terminal device, or the second distance is indicated by the third terminal device to the first terminal device. That the second distance is indicated by the second network device to the first terminal device may be understood as, for example: The second distance is indicated by the second network device to the first terminal device by using RRC signaling, MAC CE signaling, or DCI signaling. The signaling is sent by using a downlink transport channel. That the second distance is indicated by the third terminal device to the first terminal device may be understood as, for example: The second distance is indicated by the third terminal device to the first terminal device by using RRC signaling, MAC CE signaling, or SCI signaling. The signaling is sent by using a sidelink transport channel. Optionally, the first distance and the second distance may be the same or different.

FIG. 12 is a schematic flowchart of another communication method according to an embodiment of this application. According to the method, a network device may sense interference from an SL communication system by identifying a common reference signal sent by a first terminal device, and may further determine an available second resource based on a magnitude of the interference, so that the network device receives/sends data on the second resource without interference, that is, interference between a Uu communication system and the SL communication system is avoided. As shown in FIG. 12, the method includes but is not limited to the following steps.

1201. A first terminal device determines a first resource based on configuration information.

In the embodiment shown in FIG. 12, the first terminal device is a terminal device that performs SL transmission, and may also be referred to as an SL UE. A name of the first terminal device is not limited in this application.

Optionally, the configuration information may be predefined or (pre)configured in the first terminal device. For example, the configuration information is indicated by a network device to the first terminal device, or the configuration information is indicated by a third terminal device to the first terminal device. That the configuration information is indicated by the network device to the first terminal device may be understood as, for example: The configuration information is indicated by the network device to the first terminal device by using RRC signaling. That the configuration information is indicated by the third terminal device to the first terminal device may be understood as, for example: The configuration information is indicated by the third terminal device to the first terminal device by using RRC signaling.

Optionally, the method further includes: The first terminal device determines, based on third signaling, that the configuration information takes effect, for example, determining, based on a first field in the third signaling, that the configuration information takes effect. Specifically, when the second field indicates enable, active, available, or true, or a bit value corresponding to the second field is "1", the configuration information takes effect, indicating that a resource configured by using the configuration information may be used to carry the common reference signal. When the second field indicates disable, deactive, unavailable, or false, or the bit value corresponding to the second field is "0", the configuration information does not take effect, indicating that the resource configured by using the configuration information may be used to carry data. For another example, when the third signaling includes a first field, the configuration information takes effect, indicating that the resource configured by using the configuration information may be used to carry the common reference signal. When the third signaling does not include a first field, the configuration information does not take effect, indicating that the resource configured by using the configuration information may be used to carry data. The fourth signaling may be, for example, RRC signaling or MAC CE signaling. In a possible implementation, before step 1201, the first terminal device may determine, based on the fourth signaling, that the configuration information takes effect.

Optionally, the first resource may further not overlap a third resource, and the third resource includes at least one of the following: any resource in a control resource set of the first terminal device, or a resource used by the first terminal device to send a reference signal. The reference signal sent by the first terminal device may include, for example, at least one of the following: a DMRS, an S-SSB, or a CSI-RS. The DMRS sent by the first terminal device may include, for example, at least one of the following: a DMRS for PSSCH or a DMRS for PSCCH. The CSI-RS sent by the first terminal device may include, for example, an NZP CSI-RS. When the first resource does not overlap any resource in the control resource set of the first terminal device, or the first resource does not overlap a resource used by the first terminal device to send the DMRS and/or the S-SSB, it is ensured that communication between devices is not affected. When the first resource does not overlap a resource used by the first terminal device to send the CSI-RS, it can be ensured that determining of transmit power is not affected.

1202. The network device receives a common reference signal from the first terminal device on the first resource. Correspondingly, when a first condition is met, the first terminal device sends the common reference signal to the network terminal device on the first resource. The first condition includes at least one of the following: the first terminal device has to-be-sent data, or the first terminal device receives second indication information sent by the third terminal device. The second indication information indicates the first terminal device to send the common reference signal. The to-be-sent data of the first terminal device may include, for example, one or more of a PSSCH, a PSCCH, or the like.

In a possible implementation, the common reference signal may be, for example, a sequence, such as a pseudo-random sequence, or may be a combination, a variant, or the like of a sequence. In another possible implementation, the common reference signal may be, for example, a reference signal encoded by the first terminal device based on a sequence, and the reference signal encoded by the first terminal device based on the sequence may include, for example, an identifier of the first terminal device. For other descriptions of the common reference signal, refer to specific descriptions of step 301 in FIG. 3. Details are not described herein again.

1203. The network device measures the common reference signal to obtain a signal measurement result.

The network device may measure the common reference signal in, for example, any one of the following manners. A specific manner may depend on a specific implementation, a pre-agreement, a definition in a standard, or the like.

Manner 6.1: The network device periodically measures the common reference signal based on a periodicity and an offset of the periodicity. The periodicity and the offset of the periodicity are predefined or pre-configured in the network device, or the periodicity and the offset of the periodicity are indicated by the first terminal device to the network device, or the periodicity and the offset of the periodicity are indicated by a second terminal device to the network device. For example, the periodicity and the offset of the periodicity are indicated by the first terminal device to the network device by using RRC signaling, MAC CE signaling, or UCI signaling. For another example, the periodicity and the offset of the periodicity are indicated by the second terminal device to the network device by using RRC signaling, MAC CE signaling, or UCI signaling. The RRC signaling, the MAC CE signaling, or the UCI signaling may indicate the network device to periodically measure the common reference signal based on the periodicity and the offset of the periodicity. Alternatively, it may be understood as that the RRC signaling, the MAC CE signaling, or the UCI signaling is used to activate the network device to periodically measure the common reference signal based on the periodicity and the offset of the periodicity. It should be understood that, after the network device periodically measures the common reference signal based on the periodicity and the offset of the periodicity, at least one signal measurement result may be obtained, and the network device may receive/send data on a second resource based on a signal measurement result that is in the at least one signal measurement result and that is greater than or equal to a first threshold, or the network device may receive/send data on a second resource based on a signal measurement result that is in the at least one signal measurement result and that is less than or equal to a second threshold. In this way, the network device does not need to repeatedly receive an instruction for measuring the common reference signal, thereby reducing signaling overheads and power consumption of measurement.

Manner 6.2: The network device receives first signaling from the first terminal device or the second terminal device. Correspondingly, the first terminal device or the second terminal device may send the first signaling to the network device. For details about the first signaling, refer to specific descriptions of Manner 2.2 in step 304. Details are not described herein again.

Manner 6.3: A higher layer of the network device sends second signaling to a physical layer of the network device. The higher layer of the network device includes an RRC layer or a MAC layer, and the second signaling indicates the physical layer of the network device to measure the common reference signal. For details about the second signaling, refer to specific descriptions of Manner 2.3 in step 304. Details are not described herein again.

1204. The network device receives/sends data on the second resource based on the signal measurement result.

In a possible implementation, a frequency domain resource of the second resource includes a frequency domain resource of the first resource. In another possible implementation, the frequency domain resource of the second resource does not overlap the frequency domain resource of the first resource.

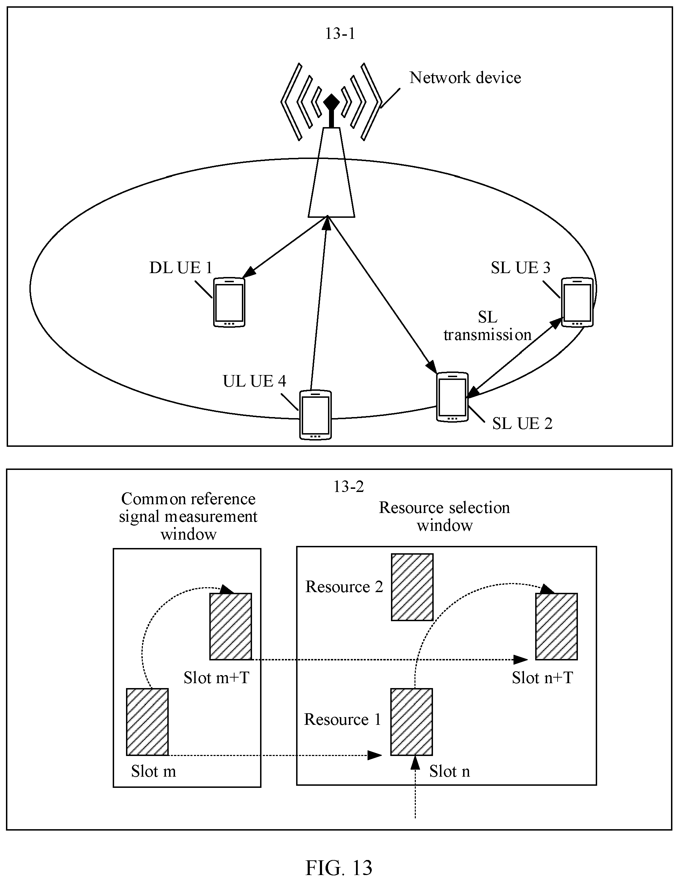

In a possible implementation, that the network device receives/sends the data on the second resource may be understood as, for example: The network device receives uplink data from the second terminal device on the second resource, or the network device sends downlink data to a fourth terminal device on the second resource. That is, the second terminal device is a terminal device that performs uplink transmission with the network device, and the fourth terminal device is a terminal device that performs downlink transmission with the network device, and may also be referred to as a DL UE. For example, FIG. 13 is another diagram of resource selection according to an embodiment of this application. In 13-1 of FIG. 13, a DL UE 1 is located in a cell of a network device, an SL UE 2 and an SL UE 3 are located at an edge of the cell of the network device, and a UL UE 4 is located at the edge of the cell of the network device. Therefore, distances between the network device and the SL UE 2, the SL UE 3, and the UL UE 4 are all greater than or equal to a first distance. The SL UE 3 periodically sends data, for example, a PSSCH, to the SL UE 2 on a resource in which a slot m to a slot n are located in 13-2 of FIG. 13. A resource in which a slot m+T to a slot n+T are located in 13-2 of FIG. 13 is a resource reserved by the SL UE 3 for retransmission to the SL UE 2. T is, for example, an integer greater than or equal to 1. The network device may obtain an RSRI by measuring a common reference signal sent by the SL UE 3, and then may estimate that the SL UE 3 is located at the cell edge. When the network device subsequently schedules transmission resources for the DL UE 1 and the UL UE 4, because the network device knows path losses of the DL UE 1 and the UL UE 4, and the DL UE 1 and the SL UE 3 are far away from each other, when available transmission resources are limited, the network device may consider sending downlink data to the DL UE 1 by using a resource 1 in which the slot n is located, and receiving, on a resource 2 in which the slot n is located, uplink data sent by the UL UE 4. This improves resource utilization and a system throughput. In addition, with assistance of the common reference signal, the scheduling not only effectively avoids mutual interference between two communication systems, and implements spatial multiplexing of the Uu and the SL, but also improves a system throughput.

In a possible implementation, step 1204 may be understood as, for example: When the signal measurement result is less than or equal to the first threshold, the network device receives/sends the data by using the second resource. The frequency domain resource of the second resource includes the frequency domain resource of the first resource. As can be learned, when the signal measurement result is less than or equal to the first threshold, it means that a distance between the first terminal device and the network device is greater than or equal to a first distance, and when the first terminal device sends data by using the second resource, even if the network device is receiving/sending data by using the second resource, mutual interference does not occur.

The first distance may be predefined or (pre) configured in the network device. For example, the first distance is indicated by the first terminal device to the network device, or the first distance is indicated by the second terminal device to the first terminal device. That the first distance is indicated by the first terminal device to the network device may be understood as, for example: The first distance is indicated by the first terminal device to the network device by using RRC signaling or MAC CE signaling. The signaling is sent by using an uplink transport channel. That the first distance is indicated by the second terminal device to the network device may be understood as, for example: The first distance is indicated by the second terminal device to the network device by using RRC signaling, MAC CE signaling, or UCI signaling. The signaling is sent by using an uplink transport channel.

In another possible implementation, step 1204 may be understood as, for example: When the signal measurement result is greater than or equal to the second threshold, the network device receives/sends the data by using the second resource. The frequency domain resource of the second resource does not overlap the frequency domain resource of the first resource. In this case, if the first terminal device and the network device send data by using an overlapping frequency domain resource at the same time, mutual interference easily occurs. Therefore, to avoid mutual interference between transmission of the two, the network device may actively avoid the frequency domain resource included in the first resource, and receive/send data by using the second resource that does not overlap the frequency domain resource of the first resource.

The second distance may be predefined or (pre) configured in the network device. For example, the second distance is indicated by the first terminal device to the network device, or the second distance is indicated by the second terminal device to the first terminal device. That the second distance is indicated by the first terminal device to the network device may be understood as, for example: The second distance is indicated by the first terminal device to the network device by using RRC signaling or MAC CE signaling. The signaling is sent by using an uplink transport channel. That the second distance is indicated by the second terminal device to the network device may be understood as, for example: The second distance is indicated by the second terminal device to the network device by using RRC signaling, MAC CE signaling, or UCI signaling. The signaling is sent by using an uplink transport channel.

The foregoing mainly describes, from a perspective of interaction between devices, the solutions provided in this application. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the terminal device (for example, the first terminal device or the second terminal device) or the network device (for example, the first network device or the second network device) may be divided into functional modules based on the foregoing method examples. For example, each functional module may be obtained through division based on each corresponding function, or two or more functions may be integrated into one processing module. The integrated module may be implemented in a form of hardware or a software functional module. It should be noted that, module division in embodiments of this application is an example, and is merely a logical function division. During actual implementation, another division manner may be used.

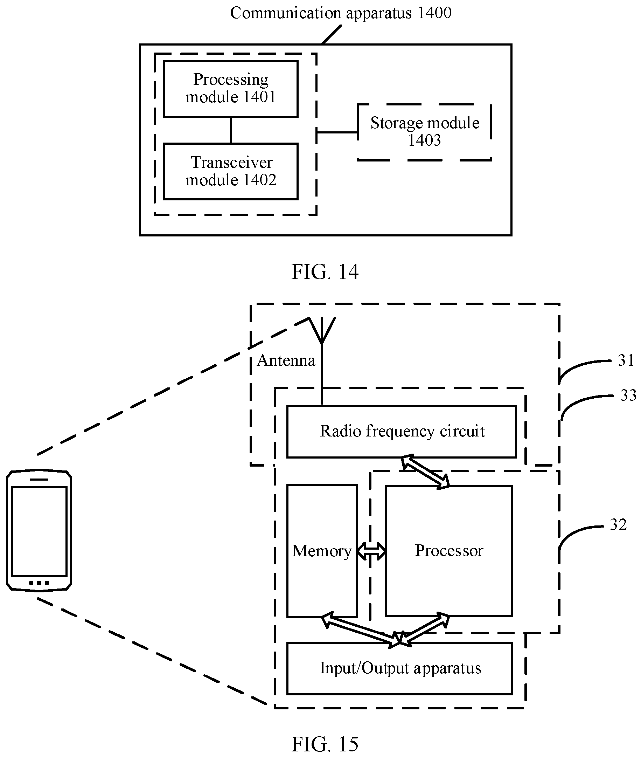

FIG. 14 is a diagram of a structure of a communication apparatus according to an embodiment of this application. The communication apparatus 1400 may be used in the method in any one of the embodiments shown in FIG. 3, FIG. 8, FIG. 10, FIG. 11, or FIG. 12. As shown in FIG. 14, the communication apparatus 1400 includes a processing module 1401 and a transceiver module 1402. The processing module 1401 may be one or more processors, and the transceiver module 1402 may be a transceiver or a communication interface. The communication apparatus may be configured to implement the terminal device (for example, the first terminal device or the second terminal device) or the network device (for example, the first network device or the second network device) in any one of the foregoing method embodiments, or a function of the network element in any one of the foregoing method embodiments. The network element or network function may be a network element in a hardware device, a software function running on dedicated hardware, or a virtualization function instantiated on a platform (for example, a cloud platform). Optionally, the communication apparatus 1400 may further include a storage module 1403, configured to store program code and data of the communication apparatus 1400.

In an example, when the communication apparatus is used as the terminal device or is a chip used in the terminal device (for example, the first terminal device or the second terminal device), and performs steps performed by the terminal device in the foregoing method embodiments, the transceiver module 1402 is configured to support communication with a network device and the like, and the transceiver module specifically performs a sending action and/or a receiving action performed by the terminal device in any one of the embodiments shown in FIG. 3, FIG. 8, FIG. 10, FIG. 11, or FIG. 12, for example, supports the terminal device in performing another process of the technology described in this specification; and the processing module 1401 may be configured to support the communication apparatus 1400 in performing a processing action in the foregoing method embodiments, for example, support the terminal device in performing step 301, and/or another process of the technology described in this specification.

For example, the processing module 1401 is configured to determine a first resource based on configuration information. The transceiver module 1402 is configured to receive a common reference signal from a network device on the first resource. The processing module 1401 is further configured to measure the common reference signal to obtain a signal measurement result. The transceiver module 1402 is further configured to send the signal measurement result to the network device. The transceiver module 1402 is further configured to receive first indication information from the network device. The first indication information indicates the first terminal device to send SL data on a second resource, the second resource is determined by the network device based on the signal measurement result, and a time domain resource of the first resource is located before a time domain resource of the second resource.

For another example, the processing module 1401 is configured to determine a first resource based on configuration information. The transceiver module 1402 is configured to receive a common reference signal from a network device on the first resource. The processing module 1401 is further configured to measure the common reference signal to obtain a signal measurement result. The transceiver module 1402 is further configured to send SL data on a second resource based on the signal measurement result. A time domain resource of the first resource is located before a time domain resource of the second resource.

For another example, the processing module 1401 is configured to determine a first resource based on configuration information. The transceiver module 1402 is configured to receive a common reference signal from a second terminal device on the first resource. The processing module 1401 is further configured to measure the common reference signal to obtain a signal measurement result. The transceiver module 1402 is further configured to send the signal measurement result to a first network device. The transceiver module 1402 is further configured to receive first indication information from the first network device. The first indication information indicates the first terminal device to send SL data on a second resource, the second resource is determined by the first network device based on the signal measurement result, and a time domain resource of the first resource is located before a time domain resource of the second resource.

For another example, the processing module 1401 is configured to determine a first resource based on configuration information. The transceiver module 1402 is configured to: when a first condition is met, send a common reference signal on the first resource. The first condition includes at least one of the following: the second terminal device has to-be-sent data, or the second terminal device receives second indication information sent by a second network device. The second indication information indicates the second terminal device to send the common reference signal.

For another example, the processing module 1401 is configured to determine a first resource based on configuration information. The transceiver module 1402 is configured to receive a common reference signal from a second terminal device on the first resource. The processing module 1401 is further configured to measure the common reference signal to obtain a signal measurement result. The transceiver module 1402 is further configured to send SL data on a second resource based on the signal measurement result. A time domain resource of the first resource is located before a time domain resource of the second resource.

For another example, the processing module 1401 is configured to determine a first resource based on configuration information. The transceiver module 1402 is configured to: when a first condition is met, send a common reference signal on the first resource. The first condition includes at least one of the following: the second terminal device has to-be-sent data, or the second terminal device receives second indication information sent by a first network device. The second indication information indicates the second terminal device to send the common reference signal.

For another example, the processing module 1401 is configured to determine a first resource based on configuration information. The transceiver module 1402 is configured to: when a first condition is met, send a common reference signal to a network terminal device on the first resource. The first condition includes at least one of the following: the first terminal device has to-be-sent data, or the first terminal device receives second indication information sent by a third terminal device. The second indication information indicates the first terminal device to send the common reference signal.

In another example, when the communication apparatus is used as the network device or is a chip used in the network device (for example, the first network device or the second network device), and performs steps performed by the network device in the foregoing method embodiments, the transceiver module 1402 is configured to support communication with a terminal device and the like, and the transceiver module specifically performs a sending action and/or a receiving action performed by the network device in any one of the embodiments shown in FIG. 3, FIG. 8, FIG. 10, FIG. 11, or FIG. 12, for example, supports the network device in performing another process of the technology described in this specification; and the processing module 1401 may be configured to support the communication apparatus 1400 in performing a processing action in the foregoing method embodiments, for example, support the network device in performing step 302, and/or another process of the technology described in this specification.

For example, the transceiver module 1402 is configured to send a common reference signal on a first resource. The transceiver module 1402 is configured to receive a signal measurement result from a first terminal device. The signal measurement result is obtained by the first terminal device by measuring the common reference signal. The processing module 1401 is further configured to determine a second resource based on the signal measurement result. The transceiver module 1402 is further configured to send first indication information to the first terminal device. The first indication information indicates the first terminal device to send SL data on the second resource, and a time domain resource of the first resource is located before a time domain resource of the second resource.

For another example, the transceiver module 1402 is configured to: when a first condition is met, send a common reference signal on a first resource. The first condition includes at least one of the following: the network device has to-be-sent data, or the network device receives second indication information sent by a first terminal device or a third terminal device. The second indication information indicates the network device to send the common reference signal, and the third terminal device is a terminal device that performs uplink transmission with the network device.

For another example, the transceiver module 1402 is configured to receive a signal measurement result from a first terminal device. The signal measurement result is obtained by the first terminal device by measuring a common reference signal. The processing module 1401 is configured to determine a second resource based on the signal measurement result. The transceiver module 1402 is further configured to send first indication information to the first terminal device. The first indication information indicates the first terminal device to send SL data on the second resource.

For another example, the transceiver module 1402 is configured to receive a common reference signal from a first terminal device on a first resource. The processing module 1401 is further configured to measure the common reference signal to obtain a signal measurement result. The transceiver module 1402 is further configured to receive/send data on a second resource based on the signal measurement result. A time domain resource of the first resource is located before a time domain resource of the second resource.

In a possible implementation, when the terminal device or the network device is a chip, the transceiver module 1402 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor by using a bus.

The processing module 1401 may be a processor. The processor may execute computer-executable instructions stored in the storage module, to enable the chip to perform the method in any one of the embodiments shown in FIG. 3, FIG. 8, FIG. 10, FIG. 11, or FIG. 12.

Further, the processor may include a controller, an arithmetic logic unit, and a register. For example, the controller is mainly responsible for decoding instructions, and transmitting control signals for operations corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving register operands, intermediate operation results, and the like that are temporarily stored during instruction execution. During specific implementation, a hardware architecture of the processor may be an ASIC architecture, a microprocessor without interlocked piped stages (microprocessor without interlocked piped stages, MIPS) architecture, an advanced reduced instruction set computer machine (advanced RISC machine, ARM) architecture, a second processor (network processor, NP) architecture, or the like. The processor may be a single-core or multi-core processor.

The storage module may be a storage module, for example, a register or a cache, inside the chip. Alternatively, the storage module may be a storage module, for example, a ROM or another type of static storage device that can store static information and instructions, or a RAM, located outside the chip.

It should be noted that a function corresponding to each of the processor and the interface may be implemented by using a hardware design, a software design, or a combination of software and hardware. This is not limited herein.

FIG. 15 is a diagram of a simplified structure of a terminal device according to an embodiment of this application. For ease of understanding and illustration, in FIG. 15, a mobile phone is used as an example of the terminal device. As shown in FIG. 15, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store software programs and data. These programs may be loaded into the memory before the communication apparatus is delivered from a factory, or may be loaded into the memory when needed later. The radio frequency circuit is mainly configured to perform conversion between a baseband signal and a radio frequency signal, and process the radio frequency signal. The antenna is mainly configured to receive and send radio frequency signals in an electromagnetic wave form, and the antenna is the antenna provided in embodiments of this application. The input/output apparatus, such as a touchscreen, a display screen, or a keyboard, is mainly configured to receive data input by a user and output data to the user. It should be noted that, some types of terminal devices may not have an input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal to the outside by using the antenna in the electromagnetic wave form. When data is sent to the terminal device, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 15 shows only one memory and one processor. An actual terminal device product may include one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a receiving unit and a sending unit (which may also be collectively referred to as a transceiver unit) of the terminal device, and the processor that has a processing function may be considered as a processing unit of the terminal device. As shown in FIG. 15, the terminal device includes a receiving module 31, a processing module 32, and a sending module 33. The receiving module 31 may also be referred to as a receiver, a receiver machine, a receiver circuit, or the like. The sending module 33 may also be referred to as a sender, a transmitter, a transmitter machine, a transmitter circuit, or the like. The processing module 32 may also be referred to as a processor, a processing board, a processing apparatus, or the like.

For example, the processing module 32 is configured to perform a function of the terminal device in any one of the embodiments shown in FIG. 3, FIG. 8, FIG. 10, FIG. 11, or FIG. 12.

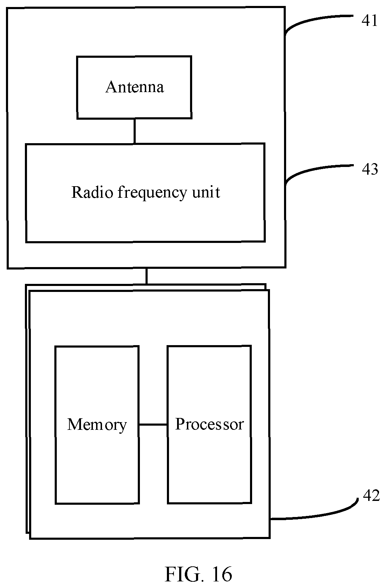

FIG. 16 is a diagram of a simplified structure of a network device according to an embodiment of this application. The network device includes a radio frequency signal receiving, sending, and conversion part and a baseband part 42. The radio frequency signal receiving, sending, and conversion part includes a receiving module part 41 and a sending module part 43 (which may also be collectively referred to as a transceiver module). The radio frequency signal receiving, sending, and conversion part is mainly configured to receive and send radio frequency signals and perform conversion between a radio frequency signal and a baseband signal. The baseband part 42 is mainly configured to perform baseband processing, control the network device, and the like. The receiving module 41 may also be referred to as a receiver, a receiver machine, a receiver circuit, or the like. The sending module 43 may also be referred to as a sender, a transmitter, a transmitter machine, a transmitter circuit, or the like. The baseband part 42 is usually a control center of the network device, which may also be referred to as a processing module, and is configured to perform steps performed by the network device in any one of the embodiments shown in FIG. 3, FIG. 8, FIG. 10, FIG. 11, or FIG. 12. For details, refer to the foregoing descriptions of related parts.

The baseband part 42 may include one or more boards. Each board may include one or more processors and one or more memories. The processor is configured to read and execute a program in the memory, to implement a baseband processing function and control the network device. If there are a plurality of boards, the boards may be interconnected to improve a processing capability. In an optional implementation, a plurality of boards may share one or more processors, or a plurality of boards share one or more memories, or a plurality of boards simultaneously use one or more processors.

For example, the sending module 43 is configured to perform a function of the network device in any one of the embodiments shown in FIG. 3, FIG. 8, FIG. 10, FIG. 11, or FIG. 12.

An embodiment of this application further provides a communication apparatus, including a processor. The processor is coupled to a memory, and the memory stores a computer program. The processor is configured to invoke the computer program in the memory, to enable the communication apparatus to perform the method in any one of the embodiments shown in FIG. 3, FIG. 8, FIG. 10, FIG. 11, or FIG. 12.

An embodiment of this application further provides a communication apparatus, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement, by using a logic circuit or executing code instructions, the method in any one of the embodiments shown in FIG. 3, FIG. 8, FIG. 10, FIG. 11, or FIG. 12.

An embodiment of this application further provides a computer-readable storage medium. The storage medium stores a computer program or instructions. When the computer program or the instructions are executed by a computer, the method in any one of the embodiments shown in FIG. 3, FIG. 8, FIG. 10, FIG. 11, or FIG. 12 is implemented.

An embodiment of this application further provides a computer program product. When a computer reads and executes the computer program product, the computer is enabled to perform the method according to any one of the embodiments shown in FIG. 3, FIG. 8, FIG. 10, FIG. 11, or FIG. 12.

An embodiment of this application further provides a chip. The chip includes at least one processor, a memory, and an interface circuit. The interface circuit is configured to provide information input/output for the at least one processor. The memory stores a computer program. When the computer program runs on one or more processors, the method in any one of the embodiments shown in FIG. 3, FIG. 8, FIG. 10, FIG. 11, or FIG. 12 is implemented.

The terms "system" and "network" in embodiments of this application may be used interchangeably. Unless otherwise specified, "/" represents an "or" relationship between associated objects. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in descriptions of this application, "a plurality of" means two or more than two unless otherwise specified. The expression "at least one of the following items (pieces)" or a similar expression thereof means any combination of these items, including any combination of singular items (pieces) or plural items (pieces). For example, at least one of a, b, or c may represent a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that provide basically same network elements or effects. A person skilled in the art may understand that the words such as "first" and "second" do not limit a quantity or an execution order, nor indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized. The terms "include", "have", and variants thereof all mean "include but not limited to", unless otherwise specifically emphasized.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this

application.

**[0268]** In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

**[0269]** The foregoing units described as separate parts may or may not be physically separate, and parts displayed as units may or may not be physical units, that is, may be located at one position, or may be distributed on a plurality of network units. A part or all of the units may be selected based on an actual requirement to achieve the objectives of the solutions in embodiments of this application. In addition, the network element units in embodiments of this application may be integrated into one processing unit, or each of the units may exist alone physically, or two or more units are integrated into one unit. The integrated unit may be implemented in a form of hardware or a software network element unit.

**[0270]** When implemented in the form of a software network element unit and sold or used as an independent product, the integrated unit may be stored in a computer-readable storage medium. Based on such an understanding, an essentially contributing part in the technical solutions of this application or all or a part of the technical solutions may be embodied in a form of a software product. The computer software product is stored in a storage medium and includes several instructions for instructing a computer device (which may be a personal computer, a terminal device, a cloud server, a network device, or the like) to perform all or a part of the steps of the method in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

**1.** A communication method, comprising:

determining, by a first terminal device, a first resource based on configuration information;
receiving, by the first terminal device, a common reference signal from a network device on the first resource;
measuring, by the first terminal device, the common reference signal to obtain a signal measurement result;
sending, by the first terminal device, the signal measurement result to the network device; and
receiving, by the first terminal device, first indication information from the network device, wherein the first indication information indicates the first terminal device to send sidelink data on a second resource, the second resource is determined by the network device based on the signal measurement result, and a time domain resource of the first resource is located before a time domain resource of the second resource.

**2.** The method according to claim 1, wherein the method further comprises:

measuring, by the first terminal device, the common reference signal based on a periodicity and an offset of the periodicity, wherein
the periodicity and the offset of the periodicity are predefined or preconfigured, or the periodicity and the offset of the periodicity are indicated by the network device to the first terminal device.

**3.** The method according to claim 1, wherein the method further comprises:
receiving, by the first terminal device, first signaling from the network device, wherein the first signaling indicates the first terminal device to measure the common reference signal.

**4.** The method according to any one of claims 1 to 3, wherein the configuration information indicates that a time-frequency position of the common reference signal comprises:

$$\{k_0, l_0+N_1\}, \{k_0, l_0+N_2\}, \ldots, \text{and } \{k_0, l_0+N_p\},$$

wherein
$k_0$ is a time domain position of the common reference signal, $l_0+N_1$, $l_0+N_2$, ..., and $l_0+N_p$ are frequency domain positions of the common reference signal, $N_i$=n*$N_{i-1}$ or $N_i$=H+$N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

**5.** The method according to any one of claims 1 to 3, wherein the configuration information indicates that a time-frequency position of the common reference signal comprises:

$\{k_0+N_1, l_0\}, \{k_0+N_2, l_0\}, ..., \text{ and } \{k_0+N_p, l_0\},$

wherein
$k_0+N_1, k_0+N_2, ..., \text{ and } k_0+N_p$ are time domain positions of the common reference signal, $l_0$ is a frequency domain position of the common reference signal, $N_i=n*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

6. A communication method, comprising:

sending, by a network device, a common reference signal on a first resource;
receiving, by the network device, a signal measurement result from a first terminal device, wherein the signal measurement result is obtained by the first terminal device by measuring the common reference signal;
determining, by the network device, a second resource based on the signal measurement result; and
sending, by the network device, first indication information to the first terminal device, wherein the first indication information indicates the first terminal device to send sidelink data on the second resource, and a time domain resource of the first resource is located before a time domain resource of the second resource.

7. The method according to claim 6, wherein the sending, by the network device, the common reference signal on the first resource comprises:

when a first condition is met, sending, by the network device, the common reference signal on the first resource, wherein
the first condition comprises at least one of the following: the network device has to-be-sent data, or the network device receives second indication information sent by the first terminal device, wherein the second indication information indicates the network device to send the common reference signal.

8. The method according to claim 6 or 7, wherein the method further comprises:
sending, by the network device, first signaling to the first terminal device, wherein the first signaling indicates the first terminal device to measure the common reference signal.

9. The method according to any one of claims 6 to 8, wherein the first resource does not overlap a third resource, and the third resource comprises at least one of the following: any resource in a control resource set, or a resource used by the network device to send a reference signal.

10. The method according to any one of claims 7 to 9, wherein the configuration information indicates that a time-frequency position of the common reference signal comprises:

$\{k_0, l_0+N_1\}, \{k_0, l_0+N_2\}, ..., \text{ and } \{k_0, l_0+N_p\},$

wherein
$k_0$ is a time domain position of the common reference signal, $l_0+N_1, l_0+N_2, ..., \text{ and } l_0+N_p$ are frequency domain positions of the common reference signal, $N_i=n*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

11. The method according to any one of claims 7 to 9, wherein the configuration information indicates that a time-frequency position of the common reference signal comprises:

$\{k_0+N_1, l_0\}, \{k_0+N_2, l_0\}, ..., \text{ and } \{k_0+N_p, l_0\},$

wherein
$k_0+N_1, k_0+N_2, ..., \text{ and } k_0+N_p$ are time domain positions of the common reference signal, $l_0$ is a frequency domain position of the common reference signal, $N_i=n*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

12. A communication method, comprising:

determining, by a first terminal device, a first resource based on configuration information;
receiving, by the first terminal device, a common reference signal from a second terminal device on the first resource;
measuring, by the first terminal device, the common reference signal to obtain a signal measurement result;
sending, by the first terminal device, the signal measurement result to a first network device; and
receiving, by the first terminal device, first indication information from the first network device, wherein the first indication information indicates the first terminal device to send sidelink data on a second resource, the second resource is determined by the first network device based on the signal measurement result, and a time domain resource of the first resource is located before a time domain resource of the second resource.

13. The method according to claim 12, wherein the second terminal device is a terminal device that performs uplink transmission with a second network device.

14. The method according to claim 12 or 13, wherein the method further comprises:

measuring, by the first terminal device, the common reference signal based on a periodicity and an offset of the periodicity, wherein
the periodicity and the offset of the periodicity are predefined or preconfigured, or the periodicity and the offset of the periodicity are indicated by the first network device to the first terminal device.

15. The method according to claim 12 or 13, wherein the method further comprises:
receiving, by the first terminal device, first signaling from the first network device, wherein the first signaling indicates the first terminal device to measure the common reference signal.

16. The method according to any one of claims 12 to 15, wherein the configuration information indicates that a time-frequency position of the common reference signal comprises:

$$\{k_0, l_0+N_1\}, \{k_0, l_0+N_2\}, ..., \text{and } \{k_0, l_0+N_p\},$$

wherein
$k_0$ is a time domain position of the common reference signal, $l_0+N_1, l_0+N_2, ...,$ and $l_0+N_p$ are frequency domain positions of the common reference signal, $N_i=n^*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

17. The method according to any one of claims 12 to 15, wherein the configuration information indicates that a time-frequency position of the common reference signal comprises:

$$\{k_0+N_1, l_0\}, \{k_0+N_2, l_0\}, ..., \text{and } \{k_0+N_p, l_0\},$$

wherein
$k_0+N_1, k_0+N_2, ...,$ and $k_0+N_p$ are time domain positions of the common reference signal, $l_0$ is a frequency domain position of the common reference signal, $N_i=n^*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

18. A communication method, comprising:

determining, by a second terminal device, a first resource based on configuration information; and
when a first condition is met, sending, by the second terminal device, a common reference signal on the first resource, wherein the first condition comprises at least one of the following: the second terminal device has to-be-sent data, or the second terminal device receives second indication information sent by a second network device, wherein the second indication information indicates the second terminal device to send the common reference signal.

19. The method according to claim 18, wherein the second terminal device is a terminal device that performs uplink transmission with the second network device.

20. The method according to claim 18 or 19, wherein the first resource does not overlap a third resource, and the third resource comprises a resource used by the second terminal device to send a reference signal.

21. The method according to any one of claims 18 to 20, wherein the configuration information indicates that a time-frequency position of the common reference signal comprises:

$$\{k_0, l_0+N_1\}, \{k_0, l_0+N_2\}, ..., \text{and } \{k_0, l_0+N_p\},$$

wherein
$k_0$ is a time domain position of the common reference signal, $l_0+N_1, l_0+N_2, ...,$ and $l_0+N_p$ are frequency domain positions of the common reference signal, $N_i=n^*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

**22.** The method according to any one of claims 18 to 20, wherein the configuration information indicates that a time-frequency position of the common reference signal comprises:

$$\{k_0+N_1,\, l_0\},\ \{k_0+N_2,\, l_0\},\ ...,\ \text{and}\ \{k_0+N_p,\, l_0\},$$

wherein
$k_0+N_1$, $k_0+N_2$, ..., and $k_0+N_p$ are time domain positions of the common reference signal, $l_0$ is a frequency domain position of the common reference signal, $N_i=n*N_{i-1}$ or $N_i=H+N_{i-1}$, $i$ is an integer greater than or equal to 1 and less than or equal to $p$, $p$ is an integer greater than or equal to 1, n is an integer greater than or equal to 0, H is an integer greater than or equal to 0, and when $i$ is 1, $N_{i-1}$ is an integer greater than or equal to 0.

**23.** A communication method, comprising:

receiving, by a first network device, a signal measurement result from a first terminal device, wherein the signal measurement result is obtained by the first terminal device by measuring a common reference signal;
determining, by the first network device, a second resource based on the signal measurement result; and
sending, by the first network device, first indication information to the first terminal device, wherein the first indication information indicates the first terminal device to send sidelink data on the second resource.

**24.** The method according to claim 23, wherein the method further comprises:
sending, by the first network device, first signaling to the first terminal device, wherein the first signaling indicates the first terminal device to measure the common reference signal.

**25.** A communication apparatus, wherein the communication apparatus comprises a module configured to perform the method according to any one of claims 1 to 24.

**26.** A communication apparatus, comprising a processor, wherein the processor is coupled to a memory, and the memory stores a computer program; and the processor is configured to invoke the computer program in the memory, to enable the communication apparatus to perform the method according to any one of claims 1 to 24.

**27.** A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 24 by using a logic circuit or by executing code instructions.

**28.** A computer-readable storage medium, wherein the storage medium stores a computer program or instructions, and when the computer program or the instructions are executed by a computer, the method according to any one of claims 1 to 24 is implemented.

**29.** A computer program product, wherein when a computer reads and executes the computer program product, the computer is enabled to perform the method according to any one of claims 1 to 24.

1-1

Network device 20

SL UE 10

Common reference signal

1-2

SL UE 10

Common reference signal

UL UE 20

FIG. 1

200

201    207    204

Processor    Processor    

CPU 0    CPU 0    

CPU 1    CPU 1    

Memory

Communication
line 202

203    205    206

Communication
interface    Output device    Input device

FIG. 2

| First terminal device | Network device |
|---|---|

301. Determine a first resource based on configuration information

302. Receive a common reference signal from the network device on the first resource

303. Measure the common reference signal to obtain a signal measurement result

304. Receive the signal measurement result from the first terminal device

305. Determine a second resource based on the signal measurement result

306. Receive first indication information from the network device

FIG. 3

Slot

| 0 | 1 | 2 | 3 | 4 | 5 | 6 | 7 | 8 | 9 | 10 | 11 | 12 | 13 |
|---|---|---|---|---|---|---|---|---|---|---|---|---|---|

← RE #11

← RE #0

Common reference signal

FIG. 4A

FIG. 4B

FIG. 4C

FIG. 5

Periodicity of three slots

Slot 2    Slot 5    Slot 8

Time

**FIG. 6**

First signaling

Start time for measuring a common reference signal

Slot n    Slot n+2

Time

**FIG. 7**

| First terminal device | Network device |

801. Determine a first resource based on configuration information

802. Receive a common reference signal from the network device on the first resource

803. Measure the common reference signal to obtain a signal measurement result

804. Send SL data on a second resource based on the signal measurement result

**FIG. 8**

9-1

9-2

FIG. 9

```
┌─────────────────┐      ┌─────────────────┐      ┌─────────────────┐
│  First terminal │      │ Second terminal │      │  First network  │
│     device      │      │     device      │      │     device      │
└────────┬────────┘      └────────┬────────┘      └────────┬────────┘
         │                        │                        │
┌────────┴───────────────┐        │                        │
│ 1001. Determine a first│        │                        │
│ resource based on      │        │                        │
│ configuration          │        │                        │
│ information            │        │                        │
└────────┬───────────────┘        │                        │
         │         ┌──────────────┴─────────────┐          │
         │         │ 1002. Determine the first  │          │
         │         │ resource based on the      │          │
         │         │ configuration information  │          │
         │         └──────────────┬─────────────┘          │
         │  ┌─────────────────────┴────┐                   │
         │  │ 1003. Receive a common   │                   │
         │  │ reference signal from the│                   │
         │  │ second terminal device on│                   │
         │  │ the first resource       │                   │
         │  └─────────────┬────────────┘                   │
         │◄───────────────┤                                │
┌────────┴─────────────┐  │                                │
│ 1004. Measure the    │  │                                │
│ common reference     │  │                                │
│ signal to obtain a   │  │                                │
│ signal measurement   │  │                                │
│ result               │  │                                │
└────────┬─────────────┘  │                                │
         │  ┌──────────────────────────┐                   │
         │  │ 1005. Receive the signal │                   │
         │  │ measurement result from  │                   │
         │  │ the first terminal device│                   │
         │  └──────────┬───────────────┘                   │
         │             │──────────────────────────────────►│
         │             │          ┌─────────────────────────┴──────┐
         │             │          │ 1006. Determine a second       │
         │             │          │ resource based on the signal   │
         │             │          │ measurement result             │
         │  ┌──────────────────┐  └─────────────────────────┬──────┘
         │  │ 1007. Receive    │                            │
         │  │ first indication │                            │
         │  │ information from  │                            │
         │  │ the first network │                           │
         │  │ device           │                            │
         │  └──────────────────┘                            │
         │◄────────────────────────────────────────────────┤
         │                        │                        │
```

FIG. 10

```
┌─────────────────────┐                    ┌─────────────────────┐
│ First terminal device│                    │   Second terminal   │
│                     │                    │       device        │
└──────────┬──────────┘                    └──────────┬──────────┘
┌──────────┴──────────────────────┐                   │
│ 1101. Determine a first resource │                   │
│    based on configuration        │                   │
│          information             │                   │
└──────────┬───────────────────────┘                  │
           │        ┌──────────────────────────────────┴────────┐
           │        │ 1102. Determine the first resource based on│
           │        │         the configuration information      │
           │        └──────────────────────────────────┬────────┘
           │   1103. Receive a common reference         │
           │   signal from the second terminal          │
           │      device on the first resource          │
           │◄───────────────────────────────────────────│
┌──────────┴───────────────────────┐                   │
│ 1104. Measure the common reference │                  │
│  signal to obtain a signal         │                  │
│      measurement result            │                  │
└──────────┬───────────────────────┘                   │
┌──────────┴───────────────────────┐                   │
│ 1105. Send SL data on a second    │                   │
│  resource based on the signal     │                   │
│      measurement result           │                   │
└──────────┬───────────────────────┘                   │
           │                                            │
```

FIG. 11

```
┌─────────────────────┐                    ┌─────────────────────┐
│   Network device    │                    │ First terminal device│
└──────────┬──────────┘                    └──────────┬──────────┘
           │        ┌──────────────────────────────────┴────────┐
           │        │ 1201. Determine a first resource based on  │
           │        │         configuration information          │
           │        └──────────────────────────────────┬────────┘
           │   1202. Receive, on the first resource,    │
           │   a common reference signal sent by        │
           │        the first terminal device           │
           │◄───────────────────────────────────────────│
┌──────────┴───────────────────────┐                   │
│ 1203. Measure the common reference │                  │
│  signal to obtain a signal         │                  │
│      measurement result            │                  │
└──────────┬───────────────────────┘                   │
┌──────────┴───────────────────────┐                   │
│ 1204. Receive/Send data on a      │                   │
│  second resource based on the     │                   │
│    signal measurement result      │                   │
└──────────┬───────────────────────┘                   │
           │                                            │
```

FIG. 12

13-1

Network device

DL UE 1

SL UE 3

SL transmission

UL UE 4

SL UE 2

13-2

Common reference signal measurement window

Resource selection window

Resource 2

Slot m+T

Slot n+T

Resource 1

Slot m

Slot n

FIG. 13

Communication apparatus 1400

Processing module 1401

Transceiver module 1402

Storage module 1403

FIG. 14

Antenna

31

33

Radio frequency circuit

Memory

Processor

32

Input/Output apparatus

FIG. 15

FIG. 16

## INTERNATIONAL SEARCH REPORT

| International application No. |
|---|
| **PCT/CN2023/134347** |

| **A.** | **CLASSIFICATION OF SUBJECT MATTER** |
|---|---|

H04L5/00(2006.01)i

According to International Patent Classification (IPC) or to both national classification and IPC

| **B.** | **FIELDS SEARCHED** |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; VEN; CNKI; ENTXT; 3GPP: 公共参考信号, 参考信号, 测量, 信号强度, 信号质量, 资源, 侧行, 侧链, 边链路, 直连, 冲突, 干扰, CRS, RS, common reference signal, measurement, RSRP, CQI, sidelink, D2D, interference, collision

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 105103645 B (HUAWEI TECHNOLOGIES CO., LTD.) 20 September 2019 (2019-09-20) description, paragraphs [0132]-[0238] | 23-29, |
| X | CN 107666712 A (CHINA MOBILE COMMUNICATION LTD., RESEARCH INSTITUTE et al.) 06 February 2018 (2018-02-06) description, paragraphs [0144]-[0283] | 18-22, 25-29 |
| Y | CN 105103645 B (HUAWEI TECHNOLOGIES CO., LTD.) 20 September 2019 (2019-09-20) description, paragraphs [0132]-[0238] | 1-17, 25-29 |
| Y | CN 106465167 A (TELEFONAKTIEBOLAGET LM ERICSSON (PUBL)) 22 February 2017 (2017-02-22) description, paragraphs [0025]-[0096] | 1-17, 25-29 |
| A | CN 115038183 A (INTEL CORP.) 09 September 2022 (2022-09-09) entire document | 1-29 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2024** | **07 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | | |
|---|---|---|
| International application No. | | |
| **PCT/CN2023/134347** | | |

| Patent document cited in search report | | | Publication date (day/month/year) | Patent family member(s) | | | Publication date (day/month/year) |
|---|---|---|---|---|---|---|---|
| CN | 105103645 | B | 20 September 2019 | WO | 2015113247 | A1 | 06 August 2015 |
| CN | 107666712 | A | 06 February 2018 | | None | | |
| CN | 106465167 | A | 22 February 2017 | EP | 3138317 | A1 | 08 March 2017 |
| | | | | EP | 3138317 | B1 | 10 June 2020 |
| | | | | WO | 2015167383 | A1 | 05 November 2015 |
| | | | | US | 2015319738 | A1 | 05 November 2015 |
| | | | | US | 10090976 | B2 | 02 October 2018 |
| CN | 115038183 | A | 09 September 2022 | JP | 2017523712 | A | 17 August 2017 |
| | | | | JP | 6584021 | B2 | 02 October 2019 |
| | | | | TW | 201616883 | A | 01 May 2016 |
| | | | | TWI | 589166 | B | 21 June 2017 |
| | | | | EP | 3178272 | A1 | 14 June 2017 |
| | | | | EP | 3178272 | B1 | 22 July 2020 |
| | | | | EP | 3761741 | A1 | 06 January 2021 |
| | | | | US | 2017188320 | A1 | 29 June 2017 |
| | | | | US | 10341968 | B2 | 02 July 2019 |
| | | | | KR | 20170018928 | A | 20 February 2017 |
| | | | | KR | 102006871 | B1 | 02 August 2019 |
| | | | | TW | 201739277 | A | 01 November 2017 |
| | | | | WO | 2016022219 | A1 | 11 February 2016 |
| | | | | BR | 112017002529 | A2 | 05 December 2017 |
| | | | | BR | 112017002529 | B1 | 24 October 2023 |
| | | | | KR | 20190085188 | A | 17 July 2019 |
| | | | | KR | 102356439 | B1 | 28 January 2022 |
| | | | | RU | 2017103922 | A | 07 August 2018 |
| | | | | RU | 2017103922 | A3 | 25 October 2018 |
| | | | | RU | 2670792 | C2 | 26 November 2018 |

Form PCT/ISA/210 (patent family annex) (July 2022)

**EP 4 637 068 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211711550